# NEUE EUROPÄISCHE PATENTSCHRIFT

(11) **EP 3 183 148 B2**
(45) Veröffentlichungstag und Bekanntmachung des Hinweises auf die Entscheidung über den Einspruch: **28.12.2022**
(45) Hinweis auf die Patenterteilung: 25.04.2018
(21) Anmeldenummer: 15739554.2
(22) Anmeldetag: 15.07.2015
(51) Int. Cl.: B60T 15/04, B60T 13/26

(54) **VERFAHREN ZUM STEUERN EINER BETRIEBSBREMSEINRICHTUNG EINES FAHRZEUGS SOWIE BETRIEBSBREMSVENTILEINRICHTUNG FÜR EINE SOLCHE BETRIEBSBREMSEINRICHTUNG**
METHOD FOR CONTROLLING A MOTOR VEHICLE SERVICE BRAKE DEVICE AND SERVICE BRAKE VALVE DEVICE FOR SAID TYPE OF SERVICE BRAKE DEVICE
PROCÉDÉ POUR COMMANDER UN DISPOSITIF DE FREINAGE DE SERVICE D'UN VÉHICULE ET DISPOSITIF SOUPAPE DE FREINAGE DE SERVICE POUR UN TEL DISPOSITIF DE FREINAGE DE SERVICE

(30) Priorität: 22.08.2014 DE 102014112014
(43) Veröffentlichungstag der Anmeldung: 28.06.2017
(73) Patentinhaber: KNORR-BREMSE Systeme für Nutzfahrzeuge GmbH, 80809 München (DE)
(72) Erfinder: HECKER, Falk, 71706 Markgröningen (DE); ROETHER, Friedbert, 74389 Cleebronn (DE); SCHMAUIDER, Thilo, 71732 Tamm (DE)
(74) Vertreter: Wiedemann, Markus
(86) Internationale Anmeldenummer: PCT/EP2015/066093
(87) Internationale Veröffentlichungsnummer: WO 2016/026616

(56) Entgegenhaltungen:
- DE-A1- 19 653 264
- DE-A1-102010 040 078
- DE-A1-102012 205 962
- US-A1- 2005 218 719
- US-A1- 2006 261 670
- US-A1- 2013 320 751

## Beschreibung

Die Erfindung betrifft ein Verfahren zum Steuern einer pneumatischen oder elektro-pneumatischen Betriebsbremseinrichtung eines Fahrzeugs, bei welchem eine Fahrerbremsanforderung durch Betätigung eines Betriebsbremsbetätigungsorgans einer Betriebsbremsventileinrichtung der Bremseinrichtung erfolgt, wobei durch Betätigung des Bremsbetätigungsorgans wenigstens ein Steuerkolben der Betriebsbremsventileinrichtung mit einer ersten Betätigungskraft belastet wird und der Steuerkolben wenigstens ein einen Einlasssitz und einen Auslasssitz beinhaltendes Doppelsitzventil der Betriebsbremsventileinrichtung direkt oder indirekt steuert, um einen pneumatischen Bremsdruck oder Bremssteuerdruck in wenigstens einem pneumatischen Betriebsbremskreis der Betriebsbremseinrichtung zu erzeugen gemäß dem Oberbegriff von Anspruch 1.

Außerdem betrifft die Erfindung eine Betriebsbremsventileinrichtung für eine pneumatische oder elektro-pneumatische Betriebsbremseinrichtung eines Fahrzeugs, mit einem durch einen Fahrer abhängig von einer Fahrerbremsanforderung betätigbaren Betriebsbremsbetätigungsorgan, wobei abhängig von einer Betätigung des Betriebsbremsbetätigungsorgans ein pneumatischer Bremsdruck oder Bremssteuerdruck in wenigstens einen Anschluss für einen pneumatischen Betriebsbremskreis eingesteuert wird, wenigstens einem von dem Bremsbetätigungsorgan betätigten Steuerkolben, wobei durch eine Betätigung des Betriebsbremsbetätigungsorgans eine erste Betätigungskraft auf den wenigstens einen Steuerkolben aufgebracht wird, wenigstens einem direkt oder indirekt von dem wenigstens einen Steuerkolben gesteuerten, einen mit einem Anschluss für einen Druckluftvorrat verbundenen Einlasssitz und einen mit einer Drucksenke verbundenen Auslasssitz umfassenden Doppelsitzventil, welches steuerungsabhängig den wenigstens einen Anschluss für den pneumatischen Betriebsbremskreis entweder mit dem Anschluss für den Druckluftvorrat oder mit der Drucksenke verbindet, gemäß dem Oberbegriff von Anspruch 11. Eine solche beispielsweise einkreisige, d.h. einen pneumatischen Bremskreis steuernde Betriebsbremsventileinrichtung ist aus DE 42 32 492 A1 bekannt. Ein gattungsgemäßes Verfahren bzw. eine gattungsgemäße Betriebsbremsventileinrichtung sind außerdem aus DE 196 53 264 A1 sowie aus US 6,659,244 B2 bekannt. Daneben sind aus dem Stand der Technik auch Betriebsbremsventileinrichtungen mit zwei pneumatischen Kreisen bekannt, beispielsweise einem Vorderachsbremskreis und einem pneumatischen Hinterachsbremskreis. Weiterhin kann eine solche, dann elektro-pneumatische Betriebsbremsventileinrichtung oder Fußbremsmodul auch durch einen rein elektrischen Kreis ergänzt sein, welcher einen vorrangigen elektro-pneumatischen Bremskreis steuert, wobei dann die beiden pneumatischen Bremskreise lediglich redundant verwendet werden. Rein pneumatische Betriebsbremsventileinrichtungen werden demnach für rein pneumatische Betriebsbremseinrichtungen und elektro-pneumatische Betriebsbremsventileinrichtungen oder Fußbremsmodule für elektro-pneumatische Betriebsbremseinrichtungen oder für EBS (Elektronisch geregelte Bremssysteme) verwendet. Allen diesen Betriebsbremsventileinrichtungen des Stands der Technik ist gemeinsam, dass sie in ihren pneumatischen Kanälen, an welche jeweils ein pneumatischer Betriebsbremskreis angeschlossen ist, lediglich einen von einer Betätigung des Bremsbetätigungsorgans, beispielsweise eines Fußbremspedals abhängigen Bremsdruck oder Bremssteuerdruck erzeugen. Andererseits existieren zum Teil seit geraumer Zeit Fahrerassistenzsysteme wie Antriebsschlupfregelung (ASR), Notbremsassistent (AEBS), Abstandsfolgereglung (ACC) oder Fahrdynamikregelung (ESP), mit deren Hilfe der vom Betriebsbremsventil ausgesteuerte Bremsdruck oder Bremssteuerdruck verändert, moduliert oder gegenüber den Radbremszylindern abgesperrt wird. Im Falle von ASR beispielsweise wird durch in die Bremsdruckleitungen zwischen dem entsprechenden Kanal des Betriebsbremsventils und den betreffenden Bremszylindern an angetriebenen Achsen geschaltete ASR-Ventile entweder der vom betreffenden Kanal der Betriebsbremsventileinrichtung ausgesteuerte Bremsdruck in die betreffenden Radbremszylinder eingesteuert werden oder auch unter einem bestimmten Vorratsdruck stehende Druckluft aus einem Druckluftvorratsbehälter im Falle übermäßigen Antriebsschlupfes.

Für eine der Betriebsbremsventileinrichtung nachgeordnete Beeinflussung oder Veränderung des Bremsdrucks bzw. Bremssteuerdrucks abhängig von Fahrbetriebsbedingungen muss daher zum einen ein gewisser Aufwand getrieben werden.

Zum andern besteht ein Nachteil üblicher ASR-Systeme darin, dass der Bremsdruck durch ABS-Drucksteuerventile lediglich gesteuert und nicht geregelt werden kann und damit nur bedingt einem Solldruck entsprechen kann. Auch können sich auf der rechten Fahrzeugseite rechts und auf der linken Fahrzeugseite unterschiedliche Bremsdrücke einstellen, was insbesondere bei leichten Bremseingriffen spürbar sein kann, wie sie beispielsweise bei einer Fahrzeugfolgeregelung (ACC, Adaptive Cruise Control) oft notwendig sind.

### Aufgabe der Erfindung

Davon ausgehend besteht die Aufgabe der Erfindung darin, eine Betriebsbremsventileinrichtung sowie ein Verfahren zu deren Steuerung einer pneumatischen oder elektro-pneumatischen Betriebsbremseinrichtung derart weiter zu entwickeln, dass der in der Betriebsbremsventileinrichtung erzeugte Bremsdruck bzw. Bremssteuerdruck auf möglichst einfache Weise fahrerunabhängig, d.h. ohne Zutun des Fahrers erzeugt oder verändert werden kann.

Hintergrund dieser Aufgabenstellung ist die Tatsache, dass elektronische Fahrerassistenzsysteme wie Antriebsschlupfregelung (ASR), Fahrdynamikregelung (ESP), Abstandsfolgeregelung (ACC) oder Notbremsassistent (AEBS), die abhängig von Fahrbetriebsbedingungen oder Fahrsituationen den Fahrer durch aktive Bremseingriffe unterstützen, immer mehr an Verbreitung gewinnen.

Diese Aufgabe wird durch die Merkmale gemäß Patentanspruch 1 sowie gemäß Patentanspruch 11 gelöst.

### Offenbarung der Erfindung

Bei dem Verfahren zum Steuern einer pneumatischen oder elektro-pneumatischen Betriebsbremseinrichtung eines Fahrzeugs wird erfindungsgemäß vorgeschlagen, dass der wenigstens eine Steuerkolben der Betriebsbremsventileinrichtung außer durch die erste Betätigungskraft zusätzlich durch eine zweite Betätigungskraft durch eine zweite Betätigungskraft belastet wird, welche in Bezug zur ersten Betätigungskraft parallel und gleichsinnig oder gegensinnig auf den wenigstens einen Steuerkolben wirkt und unabhängig von einer Fahrerbremsanforderung erzeugt wird.

Bei der Betriebsbremsventileinrichtung wird erfindungsgemäß vorgeschlagen, Mittel zum Erzeugen einer zweiten Betätigungskraft unabhängig von einer Fahrerbremsanforderung vorzusehen, derart, dass die zweite Betätigungskraft in Bezug zur ersten Betätigungskraft parallel und gleichsinnig oder gegensinnig auf den wenigstens einen Steuerkolben wirkt, sowie eine Schnittstelle, durch welche abhängig von Fahrbetriebsbedingungen gebildete Signale in die Mittel zum Erzeugen der zweiten Betätigungskraft eingesteuert werden.

Mit anderen Worten wirken auf den Steuerkolben der Betriebsbremsventileinrichtung die erste, von einer Fahrerbremsanforderung abhängige Betätigungskraft und die zweite, automatisch und ohne Zutun des Fahrers, beispielsweise auf der Basis von Signalen eines Fahrerassistenzsystems erzeugte Betätigungskraft in paralleler Weise. Folglich vermögen beide Betätigungskräfte (erste und zweite Betätigungskraft) zusammen den Steuerkolben und damit auch das Doppelsitzventil des Betriebsbremsventils zu betätigen. Dabei können die beiden Betätigungskräfte gleichsinnig, d.h. in gleicher Richtung auf den Steuerkolben wirken als auch gegensinnig, d.h. in entgegengesetzter Richtung. Damit ergeben sich zahlreiche Steuerungsmöglichkeiten des von der Betriebsbremsventileinrichtung zentral ausgesteuerten Bremsdrucks bzw. Bremssteuerdrucks für die Betriebsbremskreise.

Die erste, abhängig von einer Fahrerbremsanforderung erzeugte Betätigungskraft wirkt auf den wenigstens einen Steuerkolben stets in der gleichen Richtung, nämlich bedingt durch die Betätigungsrichtung des Bremsbetätigungsorgans in Richtung Öffnen des Auslasssitzes des Doppelsitzventils zum Belüften des wenigstens einen Betriebsbremskreises, so dass die Begriffe "gleichsinnig" bzw. "gegensinnig" in Bezug zur Wirkungsrichtung der ersten Betätigungskraft klar definiert sind. Dabei ist klar, dass im Falle einer mangels Fahrerbremsanforderung nicht vorhandenen ersten Betätigungskraft deren Wirkrichtung auf den wenigstens einen Steuerkolben lediglich gedacht ist, um eine Referenz für die hierzu dann parallele Wirkrichtung der zweiten Betätigungskraft angeben zu können.

Die mit einem solchen Verfahren bzw. mit einer solchen Betriebsbremseinrichtung erzielbaren Vorteile liegen grundsätzlich darin, dass von einer rein pneumatischen Betriebsbremsventileinrichtung bzw. von dem pneumatischen Teil einer elektro-pneumatischen Betriebsbremsventileinrichtung oder Fußbremsmoduls (wenigstens ein pneumatischer Kanal und ein elektrischer Kanal) Bremsdrücke bzw. Bremssteuerdrücke für Betriebsbremskreise unabhängig von einer Fahrerbremsanforderung und abhängig von Fahrbetriebsbedingungen automatisch erzeugt werden können. Damit können insbesondere abhängig von durch Fahrerassistenzsystemen erzeugten Signalen bereits in der Betriebsbremsventileinrichtung, d.h. an zentraler Stelle und für alle an die Betriebsbremsventileinrichtung angeschlossenen Betriebsbremskreise entsprechende Bremsdrücke ohne Zutun bzw. Einflussnahme des Fahrers erzeugt werden. Eine mit einer solchen Betriebsbremsventileinrichtung versehene Betriebsbremseinrichtung reagiert dann bei einer automatischen (Fremd-) Betätigung durch ein Fahrerassistenzsystem wie bei einer Fahrerbremsanforderung, beispielsweise im Hinblick auf die Bremskraftverteilung oder die Steuerung der Anhängerbremsen.

Insbesondere zur Realisierung einer Antriebsschlupfregelung (ASR) sind dann keine ASR-Ventile mehr notwendig, weil beim Auftreten von unzulässig hohem Antriebsschlupf an einer angetriebenen Achse (Fahrbetriebsbedingung) durch automatisches Erzeugen einer zweiten Betätigungskraft, welche dann gleichsinnig in Bezug zu einer ersten, mittels einer eventuellen Fahrerbremsanforderung erzeugten Betätigungskraft auf den Steuerkolben wirkt, wodurch der Einlassventilsitz des Doppelsitzventils geöffnet und der Bremskreis der antriebsschlupfenden Achse belüftet wird, die Bremsen auf beiden Fahrzeugseiten der antriebsschlupfenden Achse zugespannt werden können. Für eine ohnehin heutzutage übliche ABS-Funktion sind in die Bremsdruckleitungen zwischen dem entsprechenden Kanal der Betriebsbremsventileinrichtung und den betreffenden Radbremszylindern geschaltete ABS-Drucksteuerventile vorhanden, durch welche der Bremsdruck oder Bremssteuerdruck zeitweise gehalten oder reduziert werden kann

Bei in Bezug auf die Fahrzeugseiten unterschiedlichem Antriebsschlupf an der antriebsschlupfenden Achse kann dann mittels des betreffenden ABS-Drucksteuerventils der jeweilige Bremsdruck individuell gehalten oder reduziert werden.

Damit muss zur Nachrüstung eines Fahrzeugs mit einer ASR-Funktion, welches lediglich über ABS-Ventile, aber über keine ASR-Ventile verfügt, die fahrzeugseitige pneumatische Verrohrung nicht verändert werden.

Bei einfachen Bremsanforderungen, wie sie z.B. von Abstandsfolgeregelungen (ACC, Adaptive Cruise Control) automatisch erzeugt werden, müssen dann nicht mehr die ABS-Ventile zur Drucksteuerung herangezogen werden, weil die Drucksteuerung bereits in der Betriebsbremsventileinrichtung stattfindet. Folglich sind die ABS-Ventile einem geringeren Verschleiß unterworfen.

Vorteilhaft ist die Erfindung auch in Bezug zu Fahrzeugen, welche mit einem Notbremsassistenten (AEBS, Advanced Emergency Braking System), bei dem der Abstand bzw. die Relativgeschwindigkeit zu vorausfahrenden Fahrzeugen erfasst und bei einer Kollisionsgefahr automatisch die Betriebsbremsen zugespannt werden. In diesem Fall kann der Bremsdruck für alle Radbremsen sehr schnell zentral an der Betriebsbremsventileinrichtung durch Erzeugen einer entsprechenden zweiten Betätigungskraft erhöht werden.

Besonders vorteilhaft ist eine Verwendung der Erfindung auch in Fahrzeugen, welche über eine Dauerbremse wie z.B. eine Motorbremse, einen hydrodynamischen Retarder, einen elektromagnetischen Retarder oder über eine Wirbelstrombremse verfügen. Dann kann durch abhängig von einem Betätigungsgrad oder einer Wirkung der Dauerbremse erfolgtem Erzeugen einer zweiten, in Bezug zur ersten Betätigungskraft gegensinnig wirkenden Betätigungskraft der Einfluss der ersten Betätigungskraft auf den Steuerkolben und damit die Fahrerbremsanforderung reduziert werden. Mit anderen Worten wird dann die Fahrerbremsanforderung wenigstens teilweise mit der Dauerbremse im Sinne eines Bremsenblending umgesetzt und so die verschleißbehafteten Reibungsbremsen geschont. Analoges gilt für den Fall, dass das Fahrzeug über einen Hybridantrieb aus Brennkraftmaschine und Elektromotor oder auch nur über einen Elektroantrieb verfügt und ein Teil der Bremsleistung über die generatorische Bremswirkung aufgebracht werden kann.

Insgesamt steuert daher die Betriebsbremsventileinrichtung lediglich den Bremsdruck bzw. den Bremssteuerdruck aus, welcher an den Radbremsen auch tatsächlich benötigt wird. Eine radindividuelle Drucksteuerung erfolgt mittels der ABS-Drucksteuerventile möglich, welche in den Bremsdruckleitungen angeordnet sind, die zwischen der Betriebsbremsventileinrichtung und den Radbremsen gezogen sind.

Wesentlich ist bei der Erfindung auch, dass der Fahrer die durch die zweite Betätigungskraft bewirkte Bremsanforderung jederzeit durch eine Betätigung des Bremsbetätigungsorgans der Betriebsbremsventileinrichtung übersteuern kann, weil dann parallel zu der zweiten Betätigungskraft die auf der Fahrerbremsanforderung basierende erste Betätigungskraft auf den wenigstens einen Steuerkolben aufgebracht wird, welche unter Umständen größer als die zweite Betätigungskraft und auch dieser entgegen gerichtet ist.

Es versteht sich, dass im Falle mehrerer pneumatischer Kanäle der Betriebsbremsventileinrichtung auch mehr als nur ein einziger Steuerkolben durch die zweite Betätigungskraft belastet werden kann bzw. auch nur ein einziger Steuerkolben, welcher dann die zweite Betätigungskraft auf einen weiteren Betätigungskolben überträgt.

Die Erfindung bezieht sich auch auf ein Fahrzeug mit einer pneumatischen oder elektro-pneumatischen Betriebsbremseinrichtung, welche wenigstens einen pneumatischen Betriebsbremskreis sowie eine oben beschriebene Betriebsbremsventileinrichtung beinhaltet.

Wenn ein solches Fahrzeug wenigstens ein Fahrerassistenzsystem aufweist, ist vorgesehen, dass dieses über die Schnittstelle der Betriebsbremsventileinrichtung von Fahrbetriebsbedingungen abhängige Steuersignale in die elektronische Steuereinrichtung einsteuert, um die zweite Betätigungskraft für den wenigstens einen Steuerkolben in Abhängigkeit von Fahrbetriebsbedingungen zu erzeugen.

Unter Fahrbetriebsbedingungen sollen jegliche Bedingungen und Parameter verstanden werden, durch welche der Fahrbetrieb eines Fahrzeugs charakterisiert werden kann, inklusive der (vorübergehende) Stillstand des Fahrzeugs bei einem Zwischenstopp oder einem Halt wie auch im geparkten Zustand.

Bei dem Fahrerassistenzsystem kann es sich insbesondere um eines der folgenden Fahrerassistenzsysteme handeln: Eine Antriebsschlupfregelung (ASR), eine Abstandsfolgeregelung (ACC), ein Notbremsassistent (AEBS), eine Fahrdynamikregelung (ESP), eine pneumatische oder elektro-pneumatische Betriebsbremseinrichtung eines Fahrzeugs, welche eine oben beschriebene Betriebsbremsventileinrichtung beinhaltet. Diese Aufzählung ist nicht abschließend. Mithin können Signale eines jeglichen Fahrerassistenzsystems zur Erzeugung der zweiten Betätigungskraft herangezogen werden.
Durch die in den Unteransprüchen aufgeführten Maßnahmen sind vorteilhafte Weiterbildungen und Verbesserungen der in den nebengeordneten Ansprüchen angegebenen Erfindung möglich.
Die zweite Betätigungskraft kann pneumatisch, hydraulisch und/oder elektrisch erzeugt werden. Die Schnittstelle ist daher eine Schnittstelle zum Empfang von elektrischen, pneumatischen, hydraulischen oder mechanischen Signalen. Denkbar sind dabei auch Ausführungsformen, bei denen die zweite Betätigungskraft beispielsweise mit Hilfe eines elektro-mechanischen oder hydraulisch-mechanischen Aktuators erzeugt und dann z.B. mittels einer Mechanik auf den wenigstens einen Steuerkolben der Betriebsbremsventileinrichtung übertragen wird.
Besonders bevorzugt wird die zweite Betätigungskraft aber elektro-pneumatisch unter bestmöglicher Nutzung der bereits vorhandenen Verhältnisse an der Betriebsbremsventileinrichtung erzeugt. Insbesondere wird die zweite Betätigungskraft mittels einer von einer elektronischen Steuereinrichtung gesteuerten elektro-pneumatischen Magnetventileinrichtung pneumatisch erzeugt, indem ein von der elektro-pneumatischen Magnetventileinrichtung auf ein Signal der elektronischen Steuereinrichtung hin ausgesteuerter Steuerdruck auf den wenigstens einen Steuerkolben direkt oder indirekt wirkt. Dieser Steuerdruck erzeugt dann an dem wenigstens einen Steuerkolben die zweite Betätigungskraft. Vorzugsweise wird der von der wenigstens einen Magnetventileinrichtung ausgesteuerte Steuerdruck mittels einer Sensorik gemessen und durch Abgleich mit einem Sollwert in der elektronischen Steuereinrichtung geregelt. Dabei bilden die Sensorik, die Magnetventileinrichtung zusammen mit der elektronischen Steuereinrichtung einen Steuerdruckregler.

Der pneumatische Steuerdruck steht insbesondere in wenigstens einer Steuerkammer an, welche von dem wenigstens einen Steuerkolben und von wenigstens einer Wandung der Betriebsbremsventileinrichtung begrenzt ist, wobei die Steuerkammer in der Betriebsbremsventileinrichtung derart angeordnet ist, dass sie bei Belüftung eine in Bezug zur ersten Betätigungskraft gleichsinnige oder gegensinnige zweite Betätigungskraft an dem wenigstens einen Steuerkolben bewirkt. Diese Maßnahmen bedingen lediglich geringfügige Änderungen an einer Betriebsbremsventileinrichtung des Stands der Technik.

Der Steuerdruck bzw. die zweite Betätigungskraft wird insbesondere abhängig von Fahrbetriebsbedingungen automatisch erzeugt. Von den Fahrbetriebsbedingungen abhängige Signale, auf deren Basis dann die zweite Betätigungskraft erzeugt wird, stammen bevorzugt von einem Fahrerassistenzsystem und werden über die dann elektrische Schnittstelle in die elektronische Steuereinrichtung eingesteuert, wie oben bereits ausführlich dargelegt wurde.

Besondere Vorteile ergeben sich dann, wenn die auf den wenigstens einen Steuerkolben wirkende zweite Betätigungskraft, ein von der zweiten Betätigungskraft herrührender Betätigungsweg des wenigstens einen Steuerkolbens der Betriebsbremsventileinrichtung und/oder eine die zweite Betätigungskraft erzeugende Größe, z.B. der oben erwähnte pneumatische Steuerdruck als Ist-Größe gemessen und mit einer Soll-Größe im Sinne einer Regelung abgeglichen wird. Denn dann werden die zweite Betätigungskraft bzw. mit ihr in Zusammenhang stehende Größen in einen Regelkreis eingebunden. Damit können Nachteile kompensiert werden, die dadurch entstehen, dass mittels ABS-Drucksteuerventilen lediglich eine Drucksteuerung aber keine Druckregelung vorgenommen werden kann. Mit Hilfe der hier optionalen Regelung der zweiten Betätigungskraft oder einer der mit ihr in Zusammenhang stehenden obigen Größen kann die Genauigkeit der Bremsdruckeinstellung erhöht werden.

Zur Realisierung einer solchen Regelungsfunktion können Sensormittel vorgesehen werden, durch welche die auf den wenigstens einen Steuerkolben wirkende zweite Betätigungskraft, ein von der zweiten Betätigungskraft herrührender Betätigungsweg des wenigstens einen Steuerkolbens und/oder eine die zweite Betätigungskraft erzeugende Größe als Ist-Größe gemessen wird, sowie Regelungs- und Stellmittel, durch welche die Ist-Größe mit einer Soll-Größe im Sinne einer Regelung abgeglichen wird.

Gemäß einer weiteren Ausführungsform wird eine gegensinnig zu der von einer Fahrerbremsanforderung abhängigen ersten Betätigungskraft gerichtete zweite auf den wenigstens einen Steuerkolben wirkende Betätigungskraft abhängig vom Betätigungsgrad und/oder von der Bremswirkung einer Dauerbremse oder einer generatorischen Bremse des Fahrzeugs erzeugt. Insbesondere wird von den Mitteln zum Erzeugen der zweiten Betätigungskraft eine umso größere zweite Betätigungskraft erzeugt, umso größer der Betätigungsgrad und/oder die Bremswirkung der Dauerbremse ist. Die Vorteile dieser Ausführung wurden oben bereits ausführlich beschrieben.

Für eine möglichst einfache Realisierung einer solchen Funktionalität kann eine erste Steuerkammer in Bezug zu dem wenigstens einen Steuerkolben derart angeordnet sein, dass durch Belüftung der ersten Steuerkammer eine zweite, in Bezug auf die erste Betätigungskraft gleichsinnige Betätigungskraft auf den wenigstens einen Steuerkolben erzeugt wird. Weiterhin kann eine zweite Steuerkammer derart angeordnet sein, dass durch Belüftung der zweiten Steuerkammer eine zweite, in Bezug auf die erste Betätigungskraft gegensinnige Betätigungskraft auf den wenigstens einen Steuerkolben erzeugt wird, wobei die erste Steuerkammer mittels einer ersten Magnetventileinrichtung oder mittels eines ersten Steuerdruckreglers und die zweite Steuerkammer, unabhängig davon, mittels einer zweiten Magnetventileinrichtung oder mittels eines zweiten Steuerdruckreglers be- oder entlüftbar ist.
Nicht zuletzt kann der wenigstens eine Steuerkolben ein Doppelkolben mit zwei durch eine Kolbenstange verbundenen Kolben sein, von denen ein erster Kolben die erste Steuerkammer und von denen ein zweiter Kolben die zweite Steuerkammer begrenzt, wobei die erste Steuerkammer und die zweite Steuerkammer an voneinander weg weisenden Flächen einer Innenwandung der Betriebsbremsventileinrichtung grenzen, welche von der Kolbenstange dichtend durchragt wird.
Mittels der Betriebsbremsventileinrichtung wird bevorzugt für jeden Betriebsbremskreis auf der Basis der zweiten Betätigungskraft ein (durch eine Regelung beeinflusster) Bremsdruck oder Bremssteuerdruck erzeugt und dieser Bremsdruck oder Bremssteuerdruck durch in zwischen der Betriebsbremsventileinrichtung und den Radbremsen gezogenen Bremsdruckleitungen angeordneten ABS-Ventile radindividuell gesteuert.
Vorteilhafte Weiterbildungen der Erfindung ergeben sich aus den Patentansprüchen, der Beschreibung und den Zeichnungen.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Querschnittsdarstellung einer Betriebsbremsventileinrichtung einer pneumatischen oder elektropneumatischen Betriebsbremseinrichtung eines Fahrzeugs gemäß einer bevorzugten Ausführungsform der Erfindung in einer Stellung "Fahren";
- Fig.2: die Betriebsbremsventileinrichtung von Fig.1 in einer Stellung "Fahrerbremsung ohne automatische Bremsung";
- Fig.3: die Betriebsbremsventileinrichtung von Fig.1 in einer Stellung "Automatische Bremsung ohne Fahrerbremsung";
- Fig.4: die Betriebsbremsventileinrichtung von Fig.1 in einer Stellung "Automatische Bremsung und Fahrerbremsung";
- Fig.5: eine schematische Querschnittsdarstellung einer Betriebsbremsventileinrichtung einer pneumatischen oder elektropneumatischen Betriebsbremseinrichtung eines Fahrzeugs gemäß einer weiteren Ausführungsform der Erfindung in einer Stellung "Rückhalten einer Fahrerbrem sung";
- Fig.6: eine schematische Querschnittsdarstellung einer Betriebsbremsventileinrichtung einer pneumatischen oder elektropneumatischen Betriebsbremseinrichtung eines Fahrzeugs gemäß einer weiteren Ausführungsform der Erfindung;
- Fig.7: eine schematische Querschnittsdarstellung einer Betriebsbremsventileinrichtung einer pneumatischen oder elektropneumatischen Betriebsbremseinrichtung eines Fahrzeugs gemäß einer weiteren Ausführungsform der Erfindung;
- Fig.8: eine schematische Querschnittsdarstellung einer Betriebsbremsventileinrichtung einer pneumatischen oder elektropneumatischen Betriebsbremseinrichtung eines Fahrzeugs gemäß einer weiteren Ausführungsform der Erfindung;
- Fig.9a bis 9c: Ausführungsformen von Magnetventileinrichtungen, durch welche ein pneumatischer Steuerdruck zur Erzeugung einer Betätigungskraft für einen Steuerkolben der Betriebsbremsventileinrichtung erzeugbar ist.

### Beschreibung der Ausführungsbeispiele

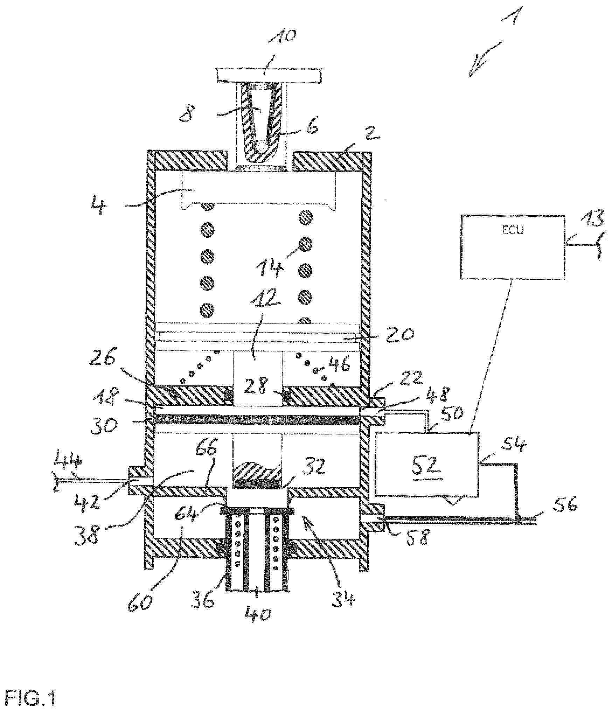

Fig.1 zeigt eine schematische Querschnittsdarstellung einer Betriebsbremsventileinrichtung 1 einer pneumatischen oder elektro-pneumatischen Betriebsbremseinrichtung eines Fahrzeugs gemäß einer bevorzugten Ausführungsform der Erfindung in einer Stellung "Fahren".

Die Betriebsbremsventileinrichtung 1 hat in der gezeigten Ausführung lediglich einen pneumatischen Betriebsbremskreis bzw. einen pneumatischen Kanal, kann aber noch weitere pneumatische Betriebsbremskreise bzw. pneumatische Kanäle aufweisen. Zusätzlich zu dem pneumatischen Betriebsbremskreis bzw. dem pneumatischen Kanal kann beispielsweise auch ein elektrischer Betriebsbremskreis bzw. ein elektrischer Kanal mit einem Weg- oder Winkelaufnehmer zur Messung einer Betätigung eines Betriebsbremsbetätigungsorgans vorhanden sein. Im letzten Fall kann bei der dann elektro-pneumatischen Betriebsbremsventileinrichtung 1 auch von einem sog. Fußbremsmodul gesprochen werden, wie es beispielsweise in elektronisch geregelten Bremssystemen (EBS) mit Bremsdruckregelung eingesetzt wird, um einerseits in zwei nachrangigen pneumatischen Backup-Bremskreisen jeweils einen pneumatischen Backup-Bremssteuerdruck und andererseits in einem vorrangigem elektro-pneumatischen Bremskreis ein von einer Bremsanforderung abhängiges elektrisches Signal in ein elektronisches Bremssteuergerät und von dort, evtl. durch weitere Signale korrigiert, in nachgeordnete Druckregelmodule einzusteuern, welche abhängig von diesem elektrischen, einen Bremsdrucksollwert repräsentierenden Signal einen entsprechenden Ist-Bremsdruck an Radbremszylindern aussteuern. Solche Druckregelmodule sind hinlänglich bekannt und beinhalten neben einem Backup-Magnetventil, welches den zugeordneten Backup-Bremssteuerdruck bei intaktem elektro-pneumatischem Bremskreis zurückhält, eine Einlass-Auslass-Magnetventilkombination, welche ausgangsseitig mit einem Relaisventil verbunden ist. Zusätzlich sind in einem solchen Druckregelmodul ein lokales elektronisches Steuergerät sowie ein Drucksensor zur Messung des vom Relaisventil ausgesteuerten Ist-Bremsdrucks integriert. Der vom Drucksensor gemessene Ist-Bremsdruck wird dann mit einem durch das vom elektrischen Kanal der Betriebsbremsventileinrichtung in das Druckregelmodul eingesteuerten Signal repräsentierten Soll-Bremsdruck im Sinne einer Druckregelung abgeglichen.

Damit ist die hier beschriebene Betriebsbremsventileinrichtung 1 geeignet bzw. vorgesehen, wenigstens den oder die pneumatischen Backup-Bremskreise eines solchen elektronisch geregelten Bremssystems (EBS) zu steuern. Alternativ kann die Betriebsbremsventileinrichtung 1 aber auch in einer rein pneumatischen Betriebsbremseinrichtung eingesetzt werden bzw. ist von einer solchen beinhaltet. In einem solchen Fall ist dann kein elektrischer Kanal vorhanden.

Die Betriebsbremsventileinrichtung 1 hat ein Gehäuse 2, in dem ein Stößelkolben 4 mit einem durch eine Deckelöffnung eines Gehäusedeckels ragenden Stößelaufnahme 6 axial beweglich aufgenommen ist. In die Stößelaufnahme 6 ragt ein Stößel 8 von oben her hinein, welcher mit einem Betriebsbremsbetätigungsorgan 10 in Form einer Fußbremsplatte verbunden ist. Wenn daher der Fahrer die Fußbremsplatte 10 betätigt, drückt der Stößel 8 in die Stößelaufnahme 6 und der Stößelkolben 4 wird durch die Betätigungskraft in Fig.1 nach unten bewegt.

Der Stößelkolben 4 überträgt die Betätigungskraft auf einen im Gehäuse 2 ebenfalls axial beweglich gelagerten Steuerkolben 12 vorzugsweise über eine Stößelkolben-Druckfeder 14. Der Steuerkolben 12 ist bevorzugt ein Doppelkolben mit zwei durch eine Kolbenstange verbundenen Kolben, von denen ein erster Kolben 18 eine erste Steuerkammer 22 und von denen ein zweiter Kolben 20 eine zweite Steuerkammer 24 begrenzt. Die erste Steuerkammer 22 und die zweite Steuerkammer 24 grenzen an voneinander weg weisenden Flächen einer hier quer zur Axialrichtung angeordneten Innenwandung 26 des Gehäuses 2, welche an einer Durchgangsöffnung von der Kolbenstange dichtend durchragt wird. Hierzu ist in der Durchgangsöffnung beispielsweise eine Ringdichtung 28 vorgesehen. Ebenso ist wenigstens einer der beiden Kolben 18, 20 des Steuerkolbens 12 an seiner radial äußeren Umfangsfläche gegenüber einer als Kolbengleitfläche dienenden radial inneren Umfangsfläche des Gehäuses 2 mittels einer geeigneten Gleitdichtung 30 abgedichtet.

Die Kolbenstange des Steuerkolbens 12 weist an ihrem vom Betriebsbremsbetätigungsorgan 10 weg weisenden Ende einen Auslasssitz 32 eines Doppelsitzventils 34 auf, welcher gegen einen im Gehäuse 2 axial beweglich gelagerten, becherförmigen und hohlen Ventilkörper 36 des Doppelsitzventils 34 dichtet oder von diesem abgehoben, einen Strömungsquerschnitt zwischen einer Arbeitskammer 38 und einer kopfseitigen Durchgangsöffnung im Ventilkörper 36 freigibt, welche zu einem Entlüftungsanschluss 40 führt. Diese Situation ist in Fig.1 dargestellt. Die Arbeitskammer 38 steht mit einem Anschluss 42 für einen Betriebsbremskreis in Verbindung, an welchen eine zu pneumatischen Radbremszylindern einer Achse führende Bremsdruckleitung 44 angeschlossen ist, in welche ein von einer elektronischen Steuereinrichtung ECU gesteuertes ABS-Drucksteuerventil geschaltet ist. Aus Maßstabsgründen sind das ABS-Drucksteuerventil und die Radbremszylinder hier nicht gezeigt. Beispielsweise der zweite Kolben 18 des Steuerkolbens 12 ist durch eine vorzugsweise an der Innenwandung 26 abgestützte, in der zweiten Steuerkammer 24 angeordnete Steuerkolben-Druckfeder 46 in die Stellung vorgespannt, in welcher der Auslasssitz 32 von dem Ventilkörper 36 abgehoben ist und dadurch die Radbremszylinder entlüftet werden. Diese Stellung des Steuerkolbens 12 entspricht daher der in Fig.1 gezeigten Stellung "Fahren" der Betriebsbremsventileinrichtung 1.

Die zweite Steuerkammer 24 steht bei dem Ausführungsbeispiel von Fig.1 lediglich unter Atmosphärendruck, wobei eine hier nicht gezeigte Verbindung zu dieser besteht, um bei Bewegungen des Steuerkolbens 12 keine kompressions- oder expansionsbedingten Kräfte auf den Steuerkolben 12 in der zweiten Steuerkammer 24 zu erzeugen.

Andererseits steht die erste Steuerkammer 22 mit einem Anschluss 48 in Verbindung, an welchen ein Ausgangsanschluss 50 einer ersten Magnetventileinrichtung 52 angeschlossen ist, welche an ihrem Eingangsanschluss 54 mit einer an einen Druckluftvorrat angeschlossenen Vorratsdruckleitung 56 in Verbindung steht. Weiterhin ist an der Betriebsbremsventileinrichtung 1 ein Vorratsanschluss 58 vorhanden, an welchen ebenfalls die Vorratsdruckleitung 56 angeschlossen ist und welche mit einer Vorratskammer 60 in Verbindung steht.

Der Ventilkörper 36 ist mittels einer am Boden des Gehäuses 2 und am Inneren des Ventilkörpers 36 abgestützten Ventilkörper-Druckfeder gegen einen Einlasssitz 64 des Doppelsitzventils 34 gedrängt, welcher an einem radial inneren Rand einer zentralen Durchgangsbohrung einer weiteren Innenwandung 66 des Gehäuses 2 ausgebildet ist. Im gegen die Wirkung der Ventilkörper-Druckfeder von dem Einlasssitz 64 abgehobenen Zustand des Ventilkörpers 36 wird ein Strömungsquerschnitt zwischen dem Vorratsanschluss 58 bzw. der Vorratskammer 60 und der Arbeitskammer 38 freigegeben, welcher eine Strömung von unter Vorratsdruck stehender Druckluft in den Anschluss 42 für den Betriebsbremskreis, d.h. in die Bremsdruckleitung ermöglicht, um die Radbremszylinder der betreffenden Achse bzw. des betreffenden Bremskreises zu belüften.

Wie bereits oben erwähnt, ist in Fig.1 die Stellung "Fahren" der Betriebsbremsventileinrichtung 1 gezeigt, in welcher der Auslasssitz 32 vom Ventilkörper 36 abgehoben und der Anschluss 42 für den Betriebsbremskreis und damit auch dessen Radbremszylinder mit dem Entlüftungsanschluss 40 verbunden sind. Dadurch sind die aktiven pneumatischen Radbremszylinder dieses Bremskreises gelöst.

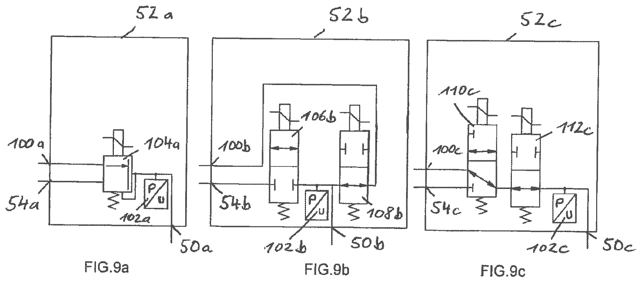

Die erste Magnetventileinrichtung 52, von welcher einige Ausführungsformen in Fig.9a bis Fig.9b gezeigt sind, ermöglicht eine Be- oder Entlüftung der ersten Steuerkammer 22 und wird von der elektronischen Steuereinrichtung ECU gesteuert, welche hier beispielsweise auch die ABS-Drucksteuerventile im Sinne einer Bremsschlupfregelung und im Sinne noch weitere, später näher beschriebene Funktionen steuert.

Die elektronische Steuereinrichtung ECU, die erste Magnetventileinrichtung 52 und die zugeordnete Verkabelung bzw. pneumatische Verrohrung oder pneumatischen Leitungen bilden zusammen mit den im Gehäuse 2 angeordneten Bauteilen dann die Betriebsbremsventileinrichtung 1 vorzugsweise als Baueinheit, wobei die elektronische Steuereinrichtung ECU, die erste Magnetventileinrichtung 52 und die zugeordnete Verkabelung bzw. pneumatische Verrohrung oder pneumatischen Leitungen in einem eigenen Gehäuse untergebracht sein können, welches beispielsweise an das Gehäuse 2 angeflanscht ist.

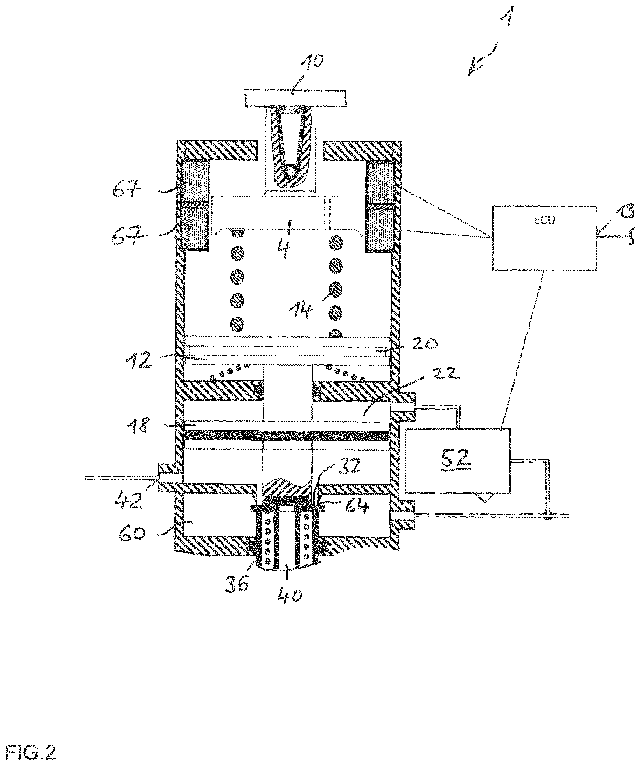

Wenn nun gemäß Fig.2 der Fahrer das Betriebsbremsbetätigungsorgan 10 betätigt, was einer Fahrerbremsanforderung entspricht, so wird der Stößelkolben 4 nach unten verschoben, wobei die Betätigungskraft über die Stößelkolben-Druckfeder 14 auf den Steuerkolben 12 übertragen wird, welcher daraufhin ebenfalls nach unten verschoben wird, bis der Auslasssitz 32 gegen den Ventilkörper 36 dichtet und damit die Verbindung zwischen dem Anschluss 42 für den Betriebsbremskreis und dem Entlüftungsanschluss 40 verschließt, so dass keine weitere Entlüftung der zugeordneten Radbremszylinder mehr erfolgen kann.

Bei weiter gehender Betätigung des Betriebsbremsbetätigungsorgans 10 auf die Fahrerbremsanforderung hin wird dann der Ventilkörper 36 mit an ihm anliegenden Auslasssitz 32 unter Abheben vom Einlasssitz 64 nach unten gedrängt. Dadurch gelangt, wie oben beschrieben, Druckluft unter Vorratsdruck von der Vorratskammer 60 in die Arbeitskammer 38 und von dort in den Anschluss 42 für den Betriebsbremskreis bzw. in die zugeordneten Radbremszylinder, um diese zu belüften und damit zuzuspannen. Bei der Situation von Fig.2 handelt es sich daher um eine reine Fahrerbremsung, bei welcher aufgrund der auf das Betriebsbremsbetätigungsorgan 10 vom Fahrer fahrerbremsanforderungsabhängig ausgeübten Betätigungskraft über die Stößelkolben-Druckfeder eine erste Betätigungskraft auf den Steuerkolben 12 ausgeübt wird, welche diesen letztlich in seine Belüftungsstellung stellt.

Bei einer solchen rein durch eine Fahrerbremsanforderung initiierten Bremsung ist die erste Magnetventileinrichtung 52 mittels der elektronischen Steuereinrichtung ECU in Entlüftungsstellung gesteuert, in welcher die erste Steuerkammer 22 mit der Atmosphäre in Verbindung steht, zur Vermeidung von Druckeffekten, die infolge der Expansion der ersten Steuerkammer 22 entstehen.

In Fig.2 ist die Ausführung von Fig.1 durch zwei redundante, vorzugsweise axial hintereinander angeordnete Wegsensoren 67 ergänzt, insbesondere um induktive Wegsensoren, welche im axialen Bereich des Stößelkolbens 4 angeordnet sind, um dessen Betätigungsweg bzw. den Betätigungsgrad zu messen, welcher proportional zum Betätigungsweg bzw. Betätigungsgrad des Betriebsbremsbetätigungsorgans 10 ist. Die Signale dieser Wegsensoren 67 werden beispielsweise in einem elektrischen Kanal der Betriebsbremsventileinrichtung 1 verwendet und in die elektronische Steuereinrichtung ECU eingesteuert, welches dann evtl. durch weitere Signale wie Lastsignale korrigierte Stellsignale an Druckregelmoduln der Vorderachse und der Hinterachse sendet, wie oben bereits beschrieben wurde. Insofern kann die Betriebsbremsventileinrichtung von Fig.2 in einem EBS (Elektronisch geregeltes Bremssystem) eingesetzt werden. Die elektronische Steuereinrichtung ECU bildet dann zugleich ein Bremssteuergerät für das EBS.

Wie aus den Fig.1 bis Fig.6 hervorgeht, ist die erste Steuerkammer 22 in der Betriebsbremsventileinrichtung 1 in Bezug zu dem Steuerkolben 12 derart angeordnet, dass durch Belüften der ersten Steuerkammer 22 eine zweite, in Bezug auf die erste, durch eine reine Fahrerbremsung initiierte Betätigungskraft gleichsinnige Betätigungskraft auf den Steuerkolben 12 erzeugt wird. Andererseits ist die zweite Steuerkammer 24 in Bezug zu dem Steuerkolben 12 derart angeordnet, dass durch Belüften der zweiten Steuerkammer 12 eine zweite, in Bezug auf die erste Betätigungskraft gegensinnige Betätigungskraft auf den Steuerkolben 12 erzeugt wird. Eine Entlüftung der Steuerkammer 24 führt dann zu einer Reduzierung der zweiten Betätigungskraft bis minimal zum Wert Null.

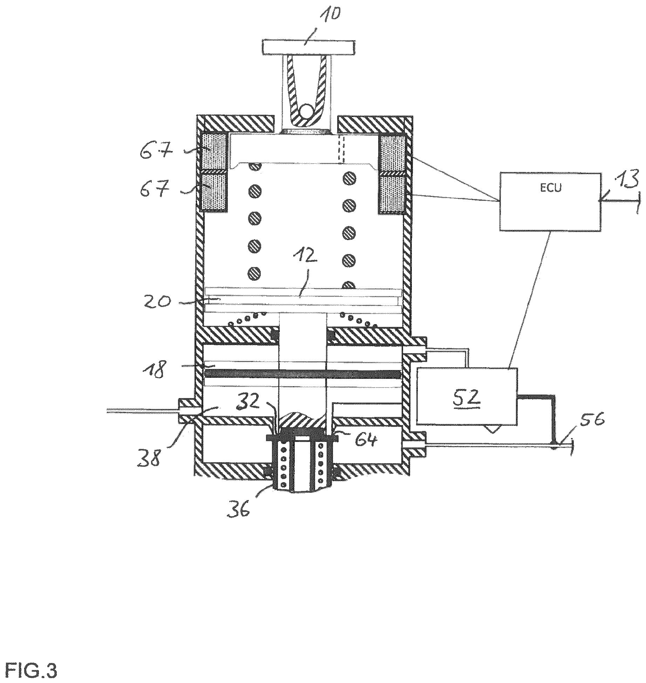

Fig.3 zeigt die Situation, in welcher ohne vorliegende Fahrerbremsanforderung die erste Steuerkammer 22 mit einem pneumatischen Steuerdruck beaufschlagt wird, der von der mittels der elektronischen Steuereinrichtung ECU in Belüftungsstellung gestellten ersten Magnetventileinrichtung 52 ausgesteuert wird. Die elektronische Steuereinrichtung ECU führt dies bevorzugt auf Signale hin durch, welche auf Fahrbetriebsbedingungen basieren. Besonders bevorzugt stammen diese Signale von einem oder mehreren Fahrerassistenzsystemen, wie beispielsweise Antriebsschlupfregelung (ASR), Abstandsfolgeregelung (ACC), Notbremsassistent (AEBS) oder Fahrdynamikregelung (ESP) und werden über eine Schnittstelle bzw. einen elektrischen Anschluss 13 in die elektronische Steuereinrichtung ECU eingesteuert. Solche Fahrerassistenzsysteme erhalten von zugeordneten Sensoren Informationen und Daten über Fahrbetriebsbedingungen wie Fahrzeuggeschwindigkeit, Raddrehzahlen, Gierrate, Lenkwinkel, Beladung, Lastverteilung, Radschlupfwerte etc. und erzeugen in deren Abhängigkeit automatisch Stellsignale für verschiedene Aktuatoren, wie beispielsweise die Bremseinrichtung des Fahrzeugs.

Mit anderen Worten werden in die elektronische Steuereinrichtung ECU eine automatische Bremsanforderung repräsentierende Bremsanforderungssignale eingesteuert, die bevorzugt in Abhängigkeit von Fahrbetriebsbedingungen erzeugt werden und von wenigstens einem Fahrerassistenzsystem stammen. Auf diese Bremsanforderungssignale hin wird die erste Magnetventileinrichtung 52 in Belüftungsstellung geschaltet, um Druckluft aus der Vorratsdruckleitung 56 als pneumatischen Steuerdruck in die erste Steuerkammer 22 einzusteuern.

In Fig.3 wirkt dann eine aus dem pneumatischen Steuerdruck resultierende zweite Betätigungskraft von oben her auf den ersten Kolben 18 des Steuerkolbens 12, mithin gleichsinnig und parallel in Bezug zu einer gedachten ersten Betätigungskraft, die durch eine Betätigung des Bremsbetätigungsorgans 10 gleichfalls von oben her, d.h. gleichsinnig auf den Steuerkolben 12 wirken würde. Da im Fall von Fig.3 jedoch keine Fahrerbremsanforderung vorliegt, ist diese erste Betätigungskraft lediglich gedacht, um eine Referenz für die Wirkrichtung der zweiten Betätigungskraft vorzugeben. Diese zweite Betätigungskraft drängt dann den Steuerkolben 12 in Fig.3 nach unten, um einerseits den Auslasssitz 32 dichtend gegen den Ventilkörper 36 zu drängen und um andererseits den Ventilkörper 36 vom Einlasssitz 64 abzuheben, damit Druckluft aus der Vorratsdruckleitung 56 in die Arbeitskammer 38 und von dort in den betreffenden Betriebsbremskreis strömen kann, um dort die Radbremsen zuzuspannen.

Je nach Modulation des in die erste Steuerkammer 22 eingesteuerten pneumatischen Steuerdrucks ist es dann möglich, eine definierte zweite Betätigungskraft am zweiten Steuerkolben 12 einzustellen, was wiederum in einer entsprechenden Bremskraft resultiert, so dass die Einstellung einer beliebigen Bremskraft zwischen dem Wert Null und einer aus dem Vorratsdruck in der Vorratsdruckleitung 56 resultierenden maximalen Bremskraft möglich ist.

Wenn die Betriebsbremsventileinrichtung 1 in einer pneumatischen oder elektro-pneumatischen Bremseinrichtung eingesetzt wird, welche über Antriebsschlupfregelung (ASR) verfügt, sind zur Realisierung dieser Funktion keine ASR-Ventile mehr notwendig, weil beim Auftreten von unzulässig hohem Antriebsschlupf an einer angetriebenen Achse (Fahrbetriebsbedingung) durch automatisches Erzeugen einer zweiten Betätigungskraft in der oben beschriebenen Weise der Bremskreis der antriebsschlupfenden Achse belüftet wird. Da in den Bremsdruckleitungen zwischen dem Kanal der Betriebsbremsventileinrichtung der antriebsschlupfenden Achse und den betreffenden Radbremszylindern ABS-Drucksteuerventile geschaltet sind, durch welche der Bremsdruck oder Bremssteuerdruck zeitweise gehalten oder reduziert werden kann, kann dann eine individuelle Anpassung des Bremsdrucks auf der rechten oder linken Fahrzeugseite erfolgen.

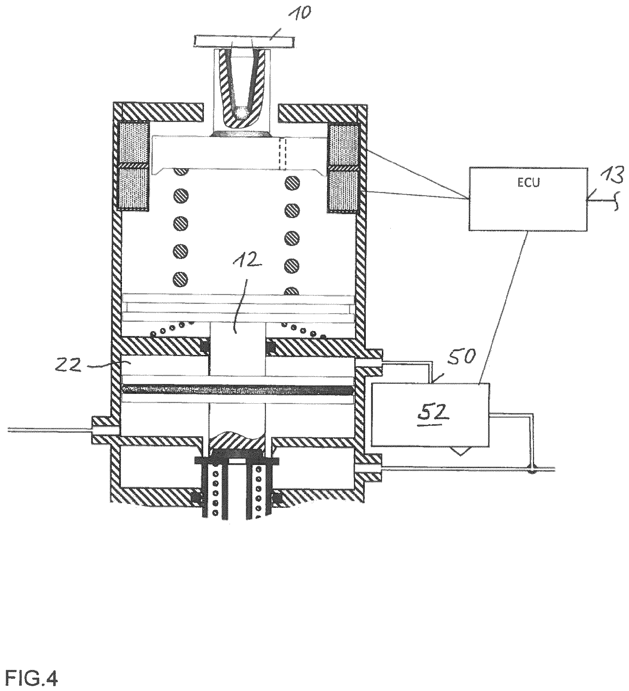

In Fig.4 wird sowohl auf eine Fahrerbremsanforderung als auch auf eine automatisch generierte Bremsanforderung hin gebremst. Dann wirken auf den Steuerkolben 12 einerseits die erste Betätigungskraft aus der Fahrerbremsanforderung wie auch die zweite Betätigungskraft aus der automatisch generierten Bremsanforderung gleichsinnig und parallel, wodurch sich die beiden Betätigungskräfte am Steuerkolben 12 addieren.

Der von der ersten Magnetventileinrichtung 52 ausgesteuerte Steuerdruck für die erste Steuerkammer 22 kann einer Druckregelung unterworfen sein. In diesem Fall wird der Ist-Steuerdruck am Ausgangsanschluss 50 mit einem Drucksensor gemessen und von der elektronischen Steuereinrichtung ECU gegenüber einem vorgegebenen Soll-Steuerdruck durch eine entsprechende Ansteuerung der ersten Magnetventileinrichtung 52 abgeglichen. Die erste Magnetventileinrichtung 52 bildet dann zusammen mit dem Drucksensor und der elektronischen Steuereinrichtung ECU einen ersten Druckregler für den Steuerdruck in der ersten Steuerkammer 22.

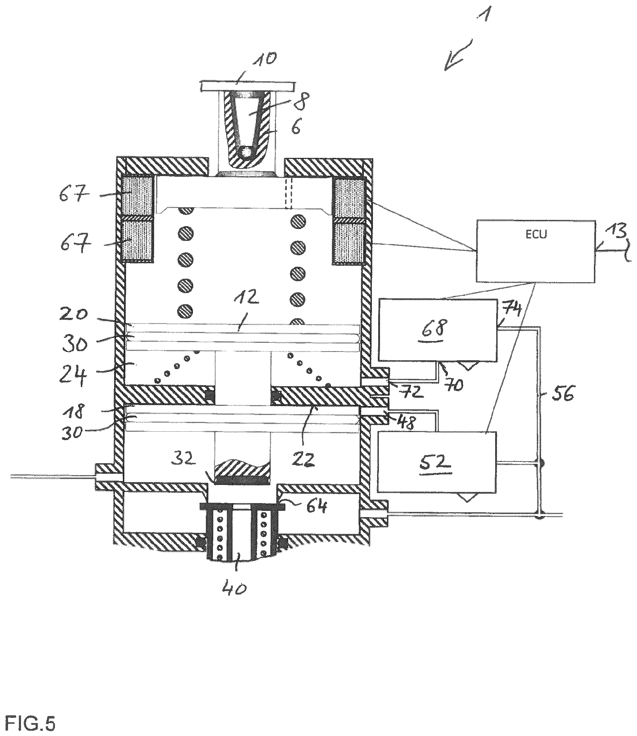

In Fig.5 ist eine weitere Ausführungsform gezeigt, bei welcher die zweite Steuerkammer 24 mittels einer eigenen, zweiten Magnetventileinrichtung 68 be- oder entlüftbar ist. Diese zweite Magnetventileinrichtung 68 steht mit ihrem Ausgangsanschluss 70 mit einem Anschluss 72 der Betriebsbremsventileinrichtung 1 in Verbindung, welcher in die zweite Steuerkammer 24 führt. Mit ihrem Eingangsanschluss 74 ist die zweite Magnetventileinrichtung 68 ebenfalls an die Vorratsdruckleitung 56 angeschlossen und wird wiederum von der elektronischen Steuereinrichtung ECU gesteuert. Beispiele für Ausführungen einer solchen zweiten Magnetventileinrichtung 68 sind in Fig.9 bis Fig.9c gezeigt, wobei die zweite Magnetventileinrichtung 68 vorzugsweise identisch wie die erste Magnetventileinrichtung 52 aufgebaut ist. Weiterhin bildet die zweite Magnetventileinrichtung 68 evtl. zusammen mit einem zugeordneten Drucksensor ebenfalls einen Bestandteil der Betriebsbremsventileinrichtung 1.

Damit ist mit Hilfe der zweiten Magnetventileinrichtung 68 eine selbständige Be- oder Entlüftung der zweiten Steuerkammer 24 unabhängig von einer Be- oder Entlüftung der ersten Steuerkammer 22 durch die erste Magnetventileinrichtung 52 möglich. Zur Abdichtung der zweiten Steuerkammer trägt der zweite Kolben 20 ebenfalls beispielsweise eine Gleitdichtung 30 an seiner radial äußeren Umfangsfläche.

Damit kann insbesondere eine zweite Betätigungskraft auf den Steuerkolben 12 ausgeübt werden, welche in Bezug zur ersten Betätigungskraft zwar weiterhin parallel, aber gegensinnig wirkt. Dadurch lässt sich die Auswirkung einer Fahrerbremsanforderung im Hinblick auf den durch diese hervorgerufenen Bremsdruck in den Radbremsen begrenzen. Diese Ausführungsform ist besonders für Fahrzeuge geeignet und vorteilhaft, welche über Dauerbremsen wie Motorbremse oder Retarder sowie über generatorische Bremsen verfügen, bei denen beim Bremsen z.B. elektrische Energie erzeugt und insbesondere gespeichert wird.

Dann kann durch abhängig von einem Betätigungsgrad oder einer Wirkung der Dauerbremse bzw. der generatorischen Bremse erfolgtem Erzeugen einer zweiten, in Bezug zur ersten Betätigungskraft gegensinnig wirkenden Betätigungskraft der Einfluss der ersten Betätigungskraft auf den Steuerkolben 12 und damit die Fahrerbremsanforderung reduziert werden. Mit anderen Worten wird dann die Fahrerbremsanforderung wenigstens teilweise mit der Dauerbremse im Sinne eines Bremsenblending umgesetzt und so die verschleißbehafteten Reibungsbremsen geschont. Insgesamt steuert daher die Betriebsbremsventileinrichtung 1 dann lediglich den Bremsdruck bzw. den Bremssteuerdruck aus, welcher an den Radbremsen als Reibungsbremsen auch tatsächlich benötigt wird.

Mit der in Fig.5 gezeigten Ausführungsform können daher die erste Steuerkammer 22 und die zweite Steuerkammer 24 jeweils unabhängig voneinander be- oder entlüftet werden. Davon umfasst ist auch ein Zustand, in welchem beide Steuerkammern 22, 24 gleichzeitig belüftet werden und dadurch gegeneinander wirkende zweite Betätigungskräfte auf den Steuerkolben 12 erzeugt werden, was in der Praxis eher nicht nachgefragt wird. Außerdem sind zwei Magnetventileinrichtungen 52, 68 z.B. nach Fig.9a bis Fig.9c vorhanden, bei denen jeweils eine Regelung des jeweils ausgesteuerten Steuerdrucks stattfindet.

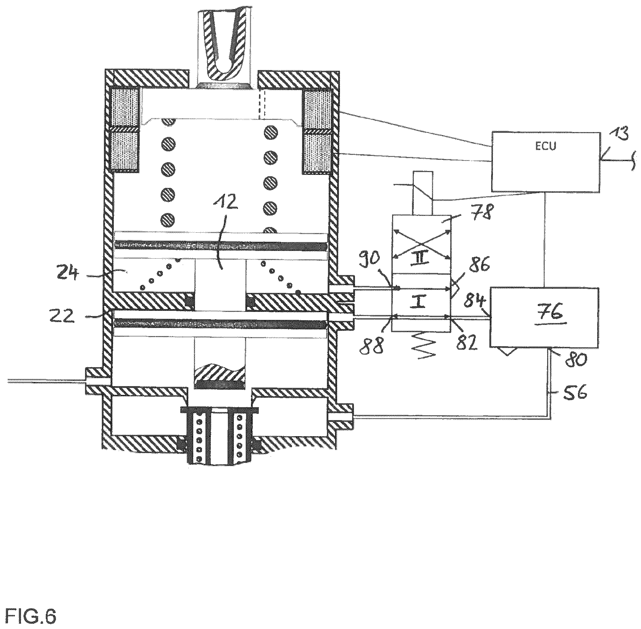

Der Unterschied der Ausführungsform von Fig.6 gegenüber Fig.5 liegt darin, dass zur Steuerung der Drücke in der ersten Steuerkammer 22 und in der zweiten Steuerkammer 24 eine einzige Magnetventileinrichtung 76 wie beispielsweise in Fig.9a bis Fig.9c gezeigt und zusätzlich ein 4/2-Wege-Magnetventil 78 verwendet wird. Die Magnetventileinrichtung 76 ist wiederum über ihren Eingangsanschluss 80 an die Vorratsdruckleitung 56 angeschlossen und wird wie auch das 4/2-Wege-Magnetventil 78 von der elektronischen Steuereinrichtung ECU wie bei den vorangehenden Ausführungsbeispielen beschrieben, gesteuert.

Das 4/2-Wege-Magnetventil 78 hat vier Anschlüsse und zwei durch die römischen Buchstaben symbolisierte Schaltstellung I und II, wobei ein erster Anschluss 82 mit dem Ausgangsanschluss 84 der Magnetventileinrichtung 76, ein zweiter Anschluss 86 mit einer Drucksenke (Entlüftung), ein dritter Anschluss 88 mit der ersten Steuerkammer 22 und ein vierter Anschluss 90 mit der zweiten Steuerkammer 24 in Verbindung steht. In seiner ersten Schaltstellung I, die in Fig.6 gezeigt ist, verbindet das 4/2-Wege-Magnerventil 78 die erste Steuerkammer 22 am dritten Anschluss 88 mit dem Ausgangsanschluss 84 der Magnetventileinrichtung 76 am ersten Anschluss 82, welche dann mit dem von dieser Magnetventileinrichtung 76 ausgesteuerten Steuerdruck beaufschlagt wird, um eine zweite Betätigungskraft für den Steuerkolben 12 zu erzeugen, welche gleichsinnig und parallel in Bezug zu einer ersten Betätigungskraft ist, welche von einer Fahrerbremsanforderung herrührt oder herrühren würde. Insbesondere wird der von der Magnetventileinrichtung 76 ausgesteuerte Steuerdruck geregelt. Weiterhin wird die an den vierten Anschluss 90 angeschlossene zweite Steuerkammer 24 mit der Drucksenke am zweiten Anschluss 86 verbunden, damit die Abwärtsbewegung des Steuerkolbens 12 durch Kompression in der zweiten Steuerkammer 24 nicht behindert wird.

In der zweiten, in Fig.6 nicht gezeigten Schaltstellung des 4/2-Wege-Magnetventils 78 werden der Ausgangsanschluss 84 der Magnetventileinrichtung 76 am ersten Anschluss 82 mit der zweiten Steuerkammer 24 am vierten Anschluss 90 und die Drucksenke am zweiten Anschluss 86 mit der ersten Steuerkammer 22 am dritten Anschluss 88 verbunden. Dadurch wird der von der Magnetventileinrichtung 76 ausgesteuerte Steuerdruck in die zweite Steuerkammer 24 eingesteuert und die erste Steuerkammer 22 entlüftet, was in einer zweiten Betätigungskraft auf den Steuerkolben 12 resultiert, welche in Bezug zu einer ersten, auf einer Fahrerbremsanforderung basierenden Betätigungskraft gegensinnig oder einer solchen entgegen gerichtet ist.

Damit können durch eine Steuerung des Steuerdrucks gemäß Fig.6 ebenfalls wahlweise beide Fälle, nämlich Be- oder Entlüften der ersten Steuerkammer 22 oder Be- oder Entlüften der zweiten Steuerkammer 24 realisiert werden. Ausgeschlossen ist dagegen der in der Praxis nicht nachgefragte Fall einer gleichzeitigen Belüftung beider Steuerkammern 22, 24. Weiterhin ist es ausreichend, nur lediglich einen einzigen, von der Magnetventileinrichtung 76 ausgesteuerten Steuerdruck zu regeln, der dann je nach Schaltstellung des 4/2-Wege-Magnetventils 78 wahlweise in die erste Steuerkammer 22 oder in die zweite Steuerkammer 24 eingesteuert wird. Daher umfasst die Ausführungsform von Fig.6 ebenfalls einen Druckregler mit Magnetventileinrichtung 76, elektronischer Steuereinrichtung ECU zum Ist-Soll-Abgleich sowie mit einem dort nicht gezeigten Drucksensor zur Messung des Ist-Steuerdrucks. Die Soll-Steuerdruckvorgabe erfolgt dabei in allen Fällen abhängig von Fahrbetriebsbedingungen und wird beispielsweise von einem Fahrerassistenzsystem angestoßen.

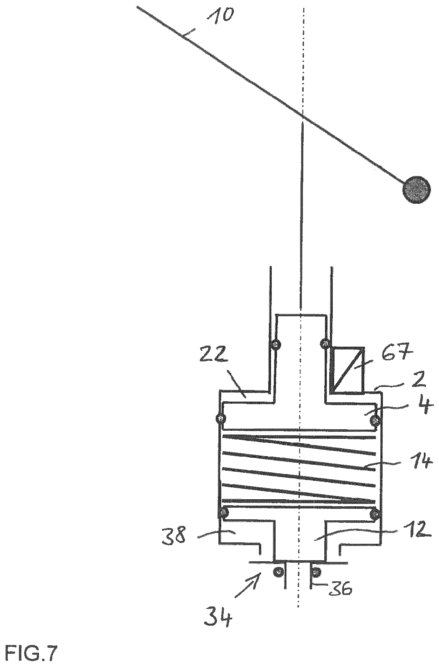

Im Unterschied zu den vorangehend beschriebenen Ausführungsformen grenzt bei der Ausführungsform von Fig.7 die erste Steuerkammer 22 nicht an den Steuerkolben 12, welcher unmittelbar das Doppelsitzventil 34 betätigt. Vielmehr wird die erste Steuerkammer 22 durch das Gehäuse 2 und den Stößelkolben 4 begrenzt, welcher, da er ebenfalls wenn auch indirekt das Doppelsitzventil 34 betätigt oder steuert, ebenfalls einen Steuerkolben der Betriebsbremsventileinrichtung 1 darstellt. Die erste Steuerkammer 22 ist dabei derart angeordnet, dass ihre Belüftung eine zweite Betätigungskraft an dem Stößelkolben 4 hervorruft, welche über die Stößelkolben-Druckfeder 14 auf den Steuerkolben 12 und von dort auf das Doppelsitzventil 34 übertragen wird. Die Funktion der Betriebsbremsventileinrichtung 1 stellt sich dann wie bei den oben beschriebenen Ausführungsformen dar.

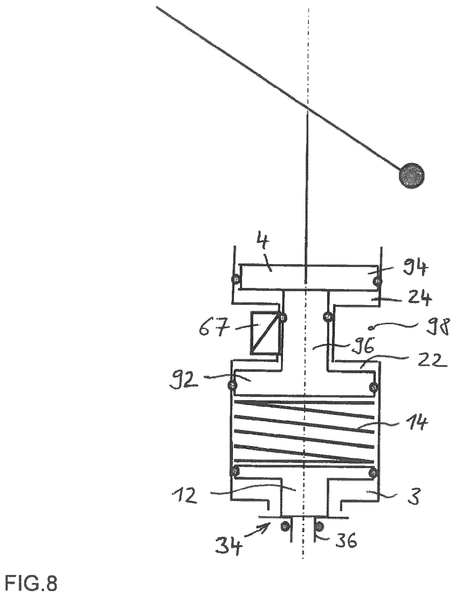

Fig.8 stellt eine Weiterbildung der Ausführungsform von Fig.7 dar, indem diese durch eine zweite Steuerkammer 24 ergänzt wurde, welche ebenfalls zwischen dem Gehäuse 2 und dem Stößelkolben 4 ausgebildet ist. Der Stößelkolben 4 ist dann beispielsweise als Doppelkolben ausgeführt, vergleichbar mit dem Steuerkolben nach Fig.1, wobei eine zwei Kolben 92, 94 verbindende Kolbenstange 96 eine Innenwandung 98 des Gehäuses 2 dichtend durchragt und zwischen einem ersten Kolben 92 und dieser Innenwandung 98 die erste Steuerkammer 22 und einem zweiten Kolben 94 und der Innenwandung 98 die zweite Steuerkammer 24 ausgebildet wird. Auch hier stellt der Stößelkolben 4 wiederum einen Steuerkolben dar, der das Doppelsitzventil 34 (indirekt) betätigt und die Funktion der Betriebsbremsventileinrichtung 1 stellt sich wie bei den oben beschriebenen Ausführungsformen dar.

In Fig.9a bis Fig.9c sind nun Beispiele für Magnetventileinrichtungen 52a, 52b, 52c bzw. Steuerdruckregler 52a, 52b, 52c dargestellt, wie sie in den vorangehenden Ausführungsbeispielen den pneumatischen Steuerdruck für die erste Steuerkammer 22 bzw. die zweite Steuerkammer 24 steuern bzw. regeln. Vereinfachend sind dabei lediglich die in Fig.1 verwendeten Bezugszeichen angetragen.

Diesen Beispielen ist gemeinsam, dass sie von der elektronischen Steuereinrichtung ECU gesteuert werden, einen Eingangsanschluss 54a, 54b, 54c aufweisen, welcher über die Vorratsdruckleitung 56 mit dem Druckluftvorrat verbunden ist, sowie einen Ausgangsanschluss 50a, 50b, 50c, welcher jeweils mit der ersten Steuerkammer 22 oder mit der zweiten Steuerkammer 24 in Verbindung steht oder in Verbindung gebracht wird. Weiterhin weisen alle Ausführungen eine Entlüftung 100a, 100b, 100c auf sowie einen Drucksensor 102a, 102b, 102c zum Messen des Ist-Steuerdrucks am Ausgangsanschluss 50a, 50b, 50c, so dass in Verbindung mit entsprechenden Algorithmen in der elektronischen Steuereinrichtung ECU, welche das am Ausgangsanschluss 50a, 50b, 50c anstehende Ist-Steuerdrucksignal gemeldet wird, eine Druckregelung des ausgesteuerten Steuerdrucks möglich ist bzw. auch durchgeführt wird.

Bei der Ausführung von Fig.9a sorgt ein Proportionalventil 104a für einen entsprechend dem elektrischen Steuersignal (proportional) ausgesteuerten Steuerdruck am Ausgangsanschluss 50a, wobei ebenfalls eine Be- und Entlüftung möglich ist. Bei der Ausführung von Fig.9b ist eine Einlass-/Auslassventilkombination aus zwei 2/2-Wege-Magnetventilen 106b, 108b vorgesehen, wobei das mit dem Eingangsanschluss 54b direkt verbundene Einlassventil 106b unbestromt geschlossen und bestromt geöffnet und das Auslassventil 108b unbestromt geöffnet und bestromt geschlossen ist. Nach Fig.9c wird als Magnetventileinrichtung 52c ein 3/2-Wege-Magnetventil 110c als Be- und Entlüftungsventil mit einer Belüftungsstellung und einer Entlüftungsstellung in Kombination mit einem 2/2-Wege-Magnetventil 112c als Halteventil verwendet, welches in seiner Sperrstellung den Druck am Ausgangsanschluss 50c hält.

Eine solche Magnetventileinrichtung 52a, 52b, 52c kann in jeder der oben beschriebenen Ausführungsformen in Kombination mit dem Drucksensor 102 als Steuerdruckregler verwendet werden, der die elektronische Steuereinrichtung ECU einschließt, um den am Ausgang 50a, 50b, 50c anstehenden Steuerdruck zu regeln.

### Bezugszahlenliste

- 1: Betriebsbremsventileinrichtung
- 2: Gehäuse
- 4: Stößelkolben
- 6: Stößelaufnahme
- 8: Stößel
- 10: Betriebsbremsbetätigungsorgan
- 12: Steuerkolben
- 13: elektrischer Anschluss
- 14: Stößelkolben - Druckfeder

- 18: erster Kolben
- 20: zweiter Kolben
- 22: erste Steuerkammer
- 24: zweite Steuerkammer
- 26: Innenwandung
- 28: Ringdichtung
- 30: Gleitdichtungen
- 32: Auslasssitz
- 34: Doppelsitzventil
- 36: Ventilkörper
- 38: Arbeitskammer
- 40: Entlüftungsanschluss
- 42: Anschluss Betriebsbremskreis
- 44: Bremsdruckleitung
- 46: Steuerkolben - Druckfeder
- 48: Anschluss
- 50: Ausgangsanschluss
- 52: erste Magnetventileinrichtung
- 54: Eingangsanschluss
- 56: Vorratsdruckleitung
- 58: Vorratsanschluss
- 60: Vorratskammer

- 64: Einlasssitz
- 66: Innenwandung
- 67: Wegsensor
- 68: zweite Magnetventileinrichtung
- 70: Ausgangsanschluss
- 72: Anschluss
- 74: Eingangsanschluss
- 76: Magnetventileinrichtung
- 78: 4/2-Wege-Magnetventil
- 80: Eingangsanschluss
- 82: erster Anschluss
- 84: Ausgangsanschluss
- 86: zweiter Anschluss
- 88: dritter Anschluss
- 90: vierter Anschluss
- 92: erster Kolben
- 94: zweiter Kolben
- 96: Kolbenstange
- 98: Innenwandung
- 100: Entlüftung
- 102: Drucksensor
- 104: Proportionalventil
- 106: 2/2-Wege-Magnetventil
- 108: 2/2-Wege-Magnetventil
- 110: 3/2-Wege-Magnetventil

## Patentansprüche

1. Verfahren zum Steuern einer pneumatischen oder elektro-pneumatischen Betriebsbremseinrichtung eines Fahrzeugs, bei welchem eine Fahrerbremsanforderung durch Betätigung eines Betriebsbremsbetätigungsorgans (10) einer Betriebsbremsventileinrichtung (1) der Bremseinrichtung erfolgt, wobei durch Betätigung des Betriebsbremsbetätigungsorgans (10) wenigstens ein Steuerkolben (4, 12) der Betriebsbremsventileinrichtung (1) mit einer ersten Betätigungskraft belastet wird und der Steuerkolben (4; 12) wenigstens ein einen Einlasssitz (64) und einen Auslasssitz (32) beinhaltendes Doppelsitzventil (34) der Betriebsbremsventileinrichtung (1) direkt oder indirekt steuert, um einen pneumatischen Bremsdruck oder Bremssteuerdruck in wenigstens einem pneumatischen Betriebsbremskreis der Betriebsbremseinrichtung zu erzeugen, **dadurch gekennzeichnet, dass** der wenigstens eine Steuerkolben (4; 12) der Betriebsbremsventileinrichtung (1) außer durch die erste Betätigungskraft zusätzlich durch eine zweite Betätigungskraft belastet wird, welche in Bezug zur ersten Betätigungskraft parallel und gleichsinnig oder gegensinnig auf den wenigstens einen Steuerkolben (4;12) wirkt und unabhängig von einer Fahrerbremsanforderung erzeugt wird.

2. Verfahren nach Anspruch 1, **dadurch gekennzeichnet, dass** die zweite Betätigungskraft pneumatisch, hydraulisch und/oder elektrisch erzeugt wird.

3. Verfahren nach Anspruch 2, **dadurch gekennzeichnet, dass** die zweite Betätigungskraft mittels wenigstens einer von einer elektronischen Steuereinrichtung (ECU) gesteuerten elektro-pneumatischen Magnetventileinrichtung (52, 68; 76, 78) pneumatisch erzeugt wird, indem ein von der wenigstens einen elektro-pneumatischen Magnetventileinrichtung (52, 68; 76, 78) auf ein Signal der elektronischen Steuereinrichtung (ECU) hin ausgesteuerter Steuerdruck auf den wenigstens einen Steuerkolben (4, 12) direkt oder indirekt wirkt.

4. Verfahren nach Anspruch 3, **dadurch gekennzeichnet, dass** der Steuerdruck geregelt wird.

5. Verfahren nach einem der vorhergehenden Ansprüche, **dadurch gekennzeichnet, dass** die zweite Betätigungskraft abhängig von Fahrbetriebsbedingungen automatisch erzeugt wird.

6. Verfahren nach einem der vorhergehenden Ansprüche, **dadurch gekennzeichnet, dass** die zweite Betätigungskraft abhängig von einem Steuersignal automatisch erzeugt wird, welches von einem Fahrerassistenzsystem ausgesteuert wird.

7. Verfahren nach einem der vorhergehenden Ansprüche, **dadurch gekennzeichnet, dass** die auf den wenigstens einen Steuerkolben (4; 12) wirkende zweite Betätigungskraft, ein von der zweiten Betätigungskraft herrührender Betätigungsweg des wenigstens einen Steuerkolbens (4; 12) und/oder eine die zweite Betätigungskraft erzeugende Größe als Ist-Größe gemessen und mit einer Soll-Größe im Sinne einer Regelung abgeglichen wird.

8. Verfahren nach einem der vorhergehenden Ansprüche, **dadurch gekennzeichnet, dass** eine gegensinnig zu der von einer Fahrerbremsanforderung abhängigen ersten Betätigungskraft gerichtete zweite auf den wenigstens einen Steuerkolben wirkende Betätigungskraft abhängig vom Betätigungsgrad und/oder von der Bremswirkung einer Dauerbremse oder einer generatorischen Bremse des Fahrzeugs erzeugt wird.

9. Verfahren nach Anspruch 8, **dadurch gekennzeichnet, dass** eine umso größere zweite Betätigungskraft erzeugt wird, umso größer der Betätigungsgrad und/oder die Bremswirkung der Dauerbremse ist.

10. Verfahren nach einem der vorhergehenden Ansprüche, **dadurch gekennzeichnet, dass** mittels der Betriebsbremsventileinrichtung (1) für jeden Betriebsbremskreis auf der Basis der zweiten Betätigungskraft ein Bremsdruck oder ein Bremssteuerdruck erzeugt und dieser Bremsdruck oder Bremssteuerdruck durch in zwischen dem Betriebsbremsventil und den Radbremsen gezogenen Bremsdruckleitungen angeordneten ABS-Ventile radindividuell gesteuert wird.

11. Betriebsbremsventileinrichtung (1) für eine pneumatische oder elektro-pneumatische Betriebsbremseinrichtung eines Fahrzeugs, mit
a) einem durch einen Fahrer abhängig von einer Fahrerbremsanforderung betätigbaren Betriebsbremsbetätigungsorgan (10), wobei abhängig von einer Betätigung des Betriebsbremsbetätigungsorgans (10) ein pneumatischer Bremsdruck oder Bremssteuerdruck in wenigstens einen Anschluss (42) für einen pneumatischen Betriebsbremskreis eingesteuert wird,
b) wenigstens einem von dem Betriebsbremsbetätigungsorgan (10) betätigten Steuerkolben (4, 12), wobei durch eine Betätigung des Betriebsbremsbetätigungsorgans (10) eine erste Betätigungskraft auf den wenigstens einen Steuerkolben (4, 12) aufgebracht wird,
c) wenigstens einem direkt oder indirekt von dem wenigstens einen Steuerkolben (4; 12) gesteuerten, einen mit einem Anschluss (58) für einen Druckluftvorrat verbundenen Einlasssitz (64) und einen mit einer Drucksenke (40) verbundenen Auslasssitz (32) umfassenden Doppelsitzventil (34), welches steuerungsabhängig den wenigstens einen Anschluss (42) für den pneumatischen Betriebsbremskreis entweder mit dem Anschluss (58) für den Druckluftvorrat oder mit der Drucksenke (40) verbindet, **dadurch gekennzeichnet, dass**
d) Mittel (ECU, 52, 68; 76, 78, 102) zum Erzeugen einer zweiten Betätigungskraft unabhängig von einer Fahrerbremsanforderung vorgesehen sind, derart, dass die zweite Betätigungskraft in Bezug zur ersten Betätigungskraft parallel und gleichsinnig oder gegensinnig auf den wenigstens einen Steuerkolben wirkt, und dass auf den wenigstens einen Steuerkolben die erste, von der Fahrerbremsanforderung abhängige Betätigungskraft und die zweite, automatisch und ohne Zutun des Fahrers erzeugte Betätigungskraft auf den Steuerkolben in paralleler Weise wirken, wobei die erste Betätigungskraft und die zweite Betätigungskraft zusammen den wenigstens einen Steuerkolben und das Doppelsitzventil betätigen, und dass
e) eine Schnittstelle (13) vorgesehen ist, durch welche abhängig von Fahrbetriebsbedingungen gebildeten Signale in die Mittel (ECU, 52, 68; 76, 78, 102) zum Erzeugen der zweiten Betätigungskraft eingesteuert werden.

12. Betriebsbremsventileinrichtung nach Anspruch 11, **dadurch gekennzeichnet, dass** die Schnittstelle (13) eine Schnittstelle zum Empfang von elektrischen, pneumatischen, hydraulischen oder mechanischen Signalen ist.

13. Betriebsbremsventileinrichtung nach Anspruch 11 oder 12, **dadurch gekennzeichnet, dass** die Mittel (ECU, 52, 68; 76, 78, 102) zur Erzeugung der zweiten Betätigungskraft eine elektronische Steuereinrichtung (ECU) umfassen und die Schnittstelle (13) eine elektrische Schnittstelle ist, wobei die elektronische Steuereinrichtung (ECU) ausgebildet ist, dass sie abhängig von über die elektrische Schnittstelle (13) empfangenen elektrischen Signalen, welche abhängig von Fahrbetriebsbedingungen gebildet sind, Signale zur Bildung der zweiten Betätigungskraft erzeugt.

14. Betriebsbremsventileinrichtung nach Anspruch 13, **dadurch gekennzeichnet, dass** die Mittel (ECU, 52, 68; 76, 78, 102) zur Erzeugung der zweiten Betätigungskraft wenigstens eine elektro-pneumatische Magnetventileinrichtung (52, 68; 76, 78) beinhalten, welche abhängig von den Signalen zur Bildung der zweiten Betätigungskraft wenigstens einen pneumatischen Steuerdruck aussteuert, von welchem die zweite Betätigungskraft abhängig ist.

15. Betriebsbremsventileinrichtung nach Anspruch 14, **dadurch gekennzeichnet, dass** der von der wenigstens einen Magnetventileinrichtung (52, 68; 76, 78) ausgesteuerte Steuerdruck mittels einer Sensorik (102) gemessen und durch Abgleich mit einem Sollwert in der elektronischen Steuereinrichtung (ECU) geregelt wird, wobei die Sensorik (102), die Magnetventileinrichtung (52, 68; 76, 78) zusammen mit der elektronischen Steuereinrichtung (ECU) einen Steuerdruckregler zur Regelung des pneumatischen Steuerdrucks bilden.

16. Betriebsbremsventileinrichtung nach Anspruch 14 oder 15, **dadurch gekennzeichnet, dass** der pneumatische Steuerdruck in wenigstens eine Steuerkammer (22, 24) einsteuerbar ist, welche von dem wenigstens einen Steuerkolben (4; 12) und von wenigstens einer Wandung (26; 98) der Betriebsbremsventileinrichtung (1) begrenzt ist, wobei die Steuerkammer (22, 24) derart angeordnet ist, dass sie bei Belüftung eine in Bezug zur ersten Betätigungskraft gleichsinnige oder gegensinnige zweite Betätigungskraft an dem wenigstens einen Steuerkolben (4; 12) bewirkt.

17. Betriebsbremsventileinrichtung nach Anspruch 16, **dadurch gekennzeichnet, dass** eine erste Steuerkammer (22) in Bezug zu dem wenigstens einen Steuerkolben (4; 12) derart angeordnet ist, dass durch Belüftung der ersten Steuerkammer (22) eine zweite, in Bezug auf die erste Betätigungskraft gleichsinnige Betätigungskraft auf den wenigstens einen Steuerkolben (4; 12) erzeugt wird, und dass eine zweite Steuerkammer (24) in Bezug zu dem wenigstens einen Steuerkolben (4; 12) derart angeordnet ist, dass durch Belüftung der zweiten Steuerkammer (24) eine zweite, in Bezug auf die erste Betätigungskraft gegensinnige Betätigungskraft auf den wenigstens einen Steuerkolben (4; 12) erzeugt wird.

18. Betriebsbremsventileinrichtung nach Anspruch 17, **dadurch gekennzeichnet, dass** die erste Steuerkammer (22) mittels einer ersten Magnetventileinrichtung (52) oder mittels eines ersten Steuerdruckreglers (ECU, 52, 102) und die zweite Steuerkammer (24), unabhängig davon, mittels einer zweiten Magnetventileinrichtung (68) oder mittels eines zweiten Steuerdruckreglers (ECU, 68, 102) be- oder entlüftbar ist.

19. Betriebsbremsventileinrichtung nach Anspruch 17 oder 18, **dadurch gekennzeichnet, dass** der wenigstens eine Steuerkolben (4; 12) ein Doppelkolben mit zwei durch eine Kolbenstange (16; 96) verbundenen Kolben (18, 20; 92, 94) ist, von denen ein erster Kolben (18, 92) die erste Steuerkammer (22) und von denen ein zweiter Kolben (20; 94) die zweite Steuerkammer (24) begrenzt, wobei die erste Steuerkammer (22) und die zweite Steuerkammer (24) an voneinander weg weisenden Flächen einer Innenwandung (26; 98) der Betriebsbremsventileinrichtung (1) grenzen, welche von der Kolbenstange (16; 96) dichtend durchragt wird.

20. Betriebsbremsventileinrichtung nach einem der Ansprüche 11 bis 19, **dadurch gekennzeichnet, dass** Sensormittel (67, 102) vorgesehen sind, durch welche die auf den wenigstens einen Steuerkolben (4; 12) wirkende zweite Betätigungskraft, ein von der zweiten Betätigungskraft herrührender Betätigungsweg des wenigstens einen Steuerkolbens (4; 12) und/oder eine die zweite Betätigungskraft erzeugende Größe als Ist-Größe gemessen wird, sowie Regelungs- und Stellmittel (ECU, 52, 68; 76, 78), durch welche die Ist-Größe mit einer Soll-Größe im Sinne einer Regelung abgeglichen wird.

21. Betriebsbremsventileinrichtung nach einem der Ansprüche 11 bis 20, **dadurch gekennzeichnet, dass** die Mittel (ECU, 52, 68; 76, 78, 102) zum Erzeugen der zweiten Betätigungskraft ausgebildet sind, dass sie abhängig von über die Schnittstelle (103) eingesteuerten, einen Betätigungsgrad und/oder eine Bremswirkung einer Dauerbremse oder einer generatorischen Bremse des Fahrzeugs repräsentierenden Signalen eine in Bezug zur ersten Betätigungskraft gegensinnige zweite Betätigungskraft erzeugen.

22. Fahrzeug mit einer pneumatischen oder elektro-pneumatischen Betriebsbremseinrichtung beinhaltend wenigstens einen pneumatischen Betriebsbremskreis sowie eine Betriebsbremsventileinrichtung (1) nach einem der Ansprüche 11 bis 21.

23. Fahrzeug nach Anspruch 22, **dadurch gekennzeichnet, dass** es wenigstens ein Fahrerassistenzsystem aufweist, welches über die Schnittstelle von Fahrbetriebsbedingungen abhängige Steuersignale in die elektronische Steuereinrichtung (ECU) einsteuert.

24. Fahrzeug nach Anspruch 23, **dadurch gekennzeichnet, dass** das wenigstens eine Fahrerassistenzsystem eines der folgenden Fahrerassistenzsysteme ist: Eine Antriebsschlupfregelung (ASR), eine Abstandsfolgeregelung (ACC), ein Notbremsassistent (AEBS), eine Fahrdynamikregelung (ESP).

## Claims

1. Method for controlling a pneumatic or electropneumatic service brake device of a vehicle, in which a brake request by the driver is realised through application of a service brake actuator (10) of a service brake valve device (1) of the brake device, wherein, as a result of application of the service brake actuator (10), at least one control piston (4, 12) of the service brake valve device (1) is subjected to a first actuation force and the control piston (4; 12) directly or indirectly controls at least one double-seat valve (34), which contains an intake valve seat (64) and an exhaust valve seat (32), of the service brake valve device (1) in order to generate a pneumatic brake pressure or brake control pressure in at least one pneumatic service brake circuit of the service brake device, **characterised in that**, besides being subjected to the first actuation force, the at least one control piston (4; 12) of the service brake valve device (1) is additionally subjected to a second actuation force which acts on the at least one control piston (4; 12) in parallel and in the same direction or in the opposite direction in relation to the first actuation force and is generated independently of a brake request by the driver.

2. Method according to claim 1, **characterised in that** the second actuation force is generated pneumatically, hydraulically and/or electrically.

3. Method according to claim 2, **characterised in that** the second actuation force is generated pneumatically by means of at least one electropneumatic solenoid valve device (52, 68; 76, 78), which is controlled by an electronic control unit (ECU), by a control pressure which is controlled by the at least one electropneumatic solenoid valve device (52, 68; 76, 78) based on a signal of the electronic control unit (ECU), acting directly or indirectly on the at least one control piston (4, 12).

4. Method according to claim 3, **characterised in that** the control pressure is adjusted.

5. Method according to one of the preceding claims, **characterised in that** the second actuation force is generated automatically in dependence on driving conditions.

6. Method according to one of the preceding claims, **characterised in that** the second actuation force is generated automatically in dependence on a control signal which is controlled by a driver assistance system.

7. Method according to one of the preceding claims, **characterised in that** the second actuation force acting on the at least one control piston (4; 12), an actuating stroke of the at least one control piston (4; 12) resulting from the second actuation force, and/or a variable which generates the second actuation force, is/are measured as an actual value and aligned with a set value by way of an adjustment.

8. Method according to one of the preceding claims, **characterised in that** a second actuation force which is directed counter to the first actuation force, the latter being dependent on a driver's brake request, and which acts on the at least one control piston is generated in dependence on the degree of actuation and/or the braking action of a retarder or a regenerative brake of the vehicle.

9. Method according to claim 8, **characterised in that** a greater second actuation force is generated corresponding to a greater degree of actuation and/or braking action of the retarder.

10. Method according to one of the preceding claims, **characterised in that**, by means of the service brake valve device (1), a brake pressure or a brake control pressure is generated for each service brake circuit on the basis of the second actuation force, and said brake pressure or brake control pressure is controlled on a wheel-specific basis by means of ABS valves arranged in brake pressure lines between the service brake valve and the wheel brakes.

11. Service brake valve device (1) for a pneumatic or electropneumatic service brake device of a vehicle, having
a) a service brake actuator (10) which can be actuated by a driver in dependence on the driver's brake request, wherein, in dependence on an actuation of the service brake actuator (10), a pneumatic brake pressure or brake control pressure is introduced into at least one port (42) for a pneumatic service brake circuit,
b) at least one control piston (4, 12) which is actuated by the service brake actuator (10), wherein, as a result of an actuation of the service brake actuator (10), a first actuation force is applied to the at least one control piston (4, 12),
c) at least one double-seat valve (34) which is controlled directly or indirectly by the at least one control piston (4; 12) and which includes an intake valve seat (64), which is connected to a port (58) for a compressed-air supply, and an exhaust valve seat (32), which is connected to a pressure sink (40), the double-seat valve (34) connecting, in dependence on the control system, the at least one port (42) for the pneumatic service brake circuit either to the port (58) for the compressed-air supply or to the pressure sink (40), **characterised in that**
d) means (ECU, 52, 68; 76, 78, 102) for generating a second actuation force independently of a driver's brake request are provided, such that the second actuation force acts on the at least one control piston in parallel and in the same direction or in the opposite direction in relation to the first actuation force, and the first actuation force, which is dependent on a driver's brake request, and the second actuation force, which is generated automatically and without the involvement of the driver, act on the act least one control piston, acting on said control piston in parallel, wherein the first actuation force and the second actuation force together actuate the at least one control piston and the double seat valve, and
e) an interface (13) is provided, through which signals formed in dependence on driving conditions are input into the means (ECU, 52, 68; 76, 78, 102) for generating the second actuation force.

12. Service brake valve device according to claim 11, **characterised in that** the interface (13) is an interface for receiving electrical, pneumatic, hydraulic or mechanical signals.

13. Service brake valve device according to claim 11 or 12, **characterised in that** the means (ECU, 52, 68; 76, 78, 102) for generating the second actuation force include an electronic control unit (ECU) and the interface (13) is an electrical interface, wherein the electronic control unit (ECU) is designed so as to generate, in dependence on electrical signals received via the electrical interface (13) which are created in dependence on driving conditions, signals for forming the second actuation force.

14. Service brake valve device according to claim 13, **characterised in that** the means (ECU, 52, 68; 76, 78, 102) for generating the second actuation force contain at least one electropneumatic solenoid valve device (52, 68; 76, 78) which controls, in dependence on the signals for forming the second actuation force, at least one pneumatic control pressure, on which the second actuation force depends.

15. Service brake valve device according to claim 14, **characterised in that** the control pressure controlled by the at least one solenoid valve device (52, 68; 76, 78) is measured by means of a sensor system (102) and is adjusted by way of alignment with a set value in the electronic control unit (ECU), wherein the sensor system (102) and the solenoid valve device (52, 68; 76, 78) together with the electronic control unit (ECU) form a control pressure adjustment means for adjusting the pneumatic control pressure.

16. Service brake valve device according to claim 14 or 15, **characterised in that** the pneumatic control pressure can be introduced into at least one control chamber (22, 24), which is defined by the at least one control piston (4; 12) and at least one wall (26; 98) of the service brake valve device (1), wherein the control chamber (22, 24) is arranged such that, when ventilated, it brings about a second actuation force (4; 12) in the same direction or in the opposite direction in relation to the first actuation force at the at least one control piston (4; 12).

17. Service brake valve device according to claim 16, **characterised in that** a first control chamber (22) is arranged in relation to the at least one control piston (4; 12) such that, through ventilation of the first control chamber (22), a second actuation force, which is in the same direction in relation to the first actuation force, is generated onto the at least one control piston (4; 12), and a second control chamber (24) is arranged in relation to the at least one control piston (4; 12) such that, through ventilation of the second control chamber (24), a second actuation force, which is in the opposite direction in relation to the first actuation force, is generated onto the at least one control piston (4; 12).

18. Service brake valve device according to claim 17, **characterised in that** the first control chamber (22) can be ventilated or vented by means of a first solenoid valve device (52) or by means of a first control pressure adjustment means (ECU, 52, 102), and the second control chamber (24) can be ventilated or vented independently thereof by means of a second solenoid valve device (68) or by means of a second control pressure adjustment means (ECU, 68, 102).

19. Service brake valve device according to claim 17 or 18, **characterised in that** the at least one control piston (4; 12) is a double piston with two pistons (18, 20; 92, 94) connected by a piston rod (16, 96), of which a first piston (18, 92) defines the first control chamber (22) and of which a second piston (20; 94) defines the second control chamber (24), wherein the first control chamber (22) and the second control chamber (24) are bounded by faces, pointing away from each other, of an inner wall (26; 98) of the service brake valve device (1), through which the piston rod (16; 96) extends in a sealing manner.

20. Service brake valve device according to one of claims 11 to 19, **characterised in that** sensor means (67, 102) are provided, by means of which the second actuation force acting on the at least one control piston (4; 12), an actuating stroke of the at least one control piston (4; 12) resulting from the second actuation force, and/or a variable which generates the second actuation force, is/are measured as an actual value, as well as adjusting and actuating means (ECU, 52, 68; 76, 78), by means of which the actual value is aligned with a set value by way of adjustment.

21. Service brake valve device according to one of claims 11 to 20, **characterised in that** the means (ECU, 52, 68; 76, 78, 102) are designed to generate the second actuation force, thereby generating, in dependence on signals input via the interface (103) which represent a degree of actuation and/or a braking action of a retarder or a regenerative brake of the vehicle, a second actuation force which is in the opposite direction in relation to the first actuation force.

22. Vehicle having a pneumatic or electropneumatic service brake device containing at least one pneumatic service brake circuit and a service brake valve device (1) according to one of claims 11 to 21.

23. Vehicle according to claim 22, **characterised in that** it has at least one driver assistance system which, via the interface, inputs control signals which are dependent on driving conditions into the electronic control unit (ECU).

24. Vehicle according to claim 23, **characterised in that** at least one driver assistance system is one of the following: anti-slip regulation (ASR), adaptive cruise control (ACC), autonomous emergency braking (AEB) or electronic stability program (ESP).

## Revendications

1. Procédé de commande d'un dispositif pneumatique ou électropneumatique de frein de service d'un véhicule, dans lequel une demande de frein par le conducteur s'effectue par actionnement d'un organe (10) d'actionnement de frein de service d'un dispositif (1) de soupape de frein de service du dispositif de frein, dans lequel, par actionnement de l'organe (10) d'actionnement du frein de service, au moins un piston (4, 12) de commande du dispositif (1) de soupape de frein de service est soumis à une première force d'actionnement et le piston (4; 12) de commande commande directement ou indirectement au moins une soupape (34) à double siège, comportant un siège (64) d'entrée et un siège (32) de sortie, du dispositif (1) à soupape de frein de service, pour produire une pression de frein pneumatique ou une pression de commande de frein dans au moins un circuit de frein de service pneumatique du dispositif de frein de service, **caractérisé en ce que** l'on soumet le au moins un piston (4; 12) de commande du dispositif (1) à soupape de frein de service, outre à la première force d'actionnement, supplémentairement à une deuxième force d'actionnement ou, au lieu de la première force d'actionnement, à une deuxième force d'actionnement, qui, par rapport à la première force d'actionnement, agit, parallèlement et dans le même sens ou en sens contraire, sur le au moins un piston (4; 12) de commande et est produite indépendamment d'une demande de frein par le conducteur.

2. Procédé suivant la revendication 1, **caractérisé en ce que** l'on produit la deuxième force d'actionnement pneumatiquement, hydrauliquement et/ou électriquement.

3. Procédé suivant la revendication 2, **caractérisé en ce que** l'on produit pneumatiquement la deuxième force d'actionnement au moyen d'au moins un dispositif (52, 68; 76, 78) d'électrovanne électropneumatique commandé par un dispositif (ECU) électronique de commande, par le fait qu'une pression de commande, commandée par le au moins un dispositif (52, 68; 76, 78) électropneumatique à électrovanne agit, sur un signal du dispositif (ECU) électronique de commande, directement ou indirectement sur le au moins un piston (4, 12) de commande.

4. Procédé suivant la revendication 3, **caractérisé en ce que** l'on régule la pression de commande.

5. Procédé suivant l'une des revendications précédentes, **caractérisé en ce que** l'on produit la deuxième force d'actionnement automatiquement en fonction de conditions de fonctionnement en marche.

6. Procédé suivant l'une des revendications précédentes, **caractérisé en ce que** l'on produit automatiquement la deuxième force d'actionnement en fonction d'un signal de commande, qui est commandé par un système d'assistance à la conduite.

7. Procédé suivant l'une des revendications précédentes, **caractérisé en ce que** l'on mesure, comme grandeur réelle, la deuxième force d'actionnement agissant sur le au moins un piston (4; 12) de commande, un trajet d'actionnement, provenant de la deuxième force d'actionnement, du au moins un piston (4; 12) de commande et/ou une grandeur produisant la deuxième force de commande et on la compare à une grandeur de consigne au sens d'une régulation.

8. Procédé suivant l'une des revendications précédentes, **caractérisé en ce que** l'on produit, en fonction du degré d'actionnement et/ou de l'effet de frein d'un frein à service continu générique du véhicule, une deuxième force d'actionnement agissant sur le au moins un piston de commande et de sens contraire à la première force d'actionnement dépendant d'une demande de frein par le conducteur.

9. Procédé suivant la revendication 8, **caractérisé en ce que** l'on produit une deuxième force d'actionnement d'autant plus intense que le degré d'actionnement et/ou l'effet du frein à service continu est plus grand.

10. Procédé suivant l'une des revendications précédentes, **caractérisé en ce qu'**au moyen du dispositif (1) à soupape de frein de service, on produit, pour chaque circuit de frein de service sur la base de la deuxième force d'actionnement, une pression de frein ou une pression de commande de frein et on commande individuellement cette pression de frein ou cette pression de commande de frein par des soupapes ABS montées entre la soupape de frein de service et des conduits pour la pression de frein tirés des freins de roue.

11. Dispositif (1) à soupape de frein de service pour un dispositif pneumatique ou électropneumatique de frein de service d'un véhicule, comprenant
a) un organe (10) d'actionnement de frein de service pouvant être actionné par le conducteur en fonction d'une demande de frein par le conducteur, dans lequel, en fonction d'un actionnement de l'organe (10) d'actionnement du frein de service, une pression de frein pneumatique ou une pression de commande de frein pneumatique est appliquée dans au moins un raccord (42) d'un circuit pneumatique de frein de service,
b) au moins un piston (4, 12) de commande actionné par l'organe (10) d'actionnement de frein de service, dans lequel, par un actionnement de l'organe (10) d'actionnement du frein de service, une première force d'actionnement peut être appliquée au au moins un piston (4, 12) de commande,
c) au moins une soupape (34) à double siège comprenant un siège (64) d'entrée, commandé directement ou indirectement par le au moins un piston (4; 12) de commande et relié à un raccord (58) pour un réservoir d'air comprimé, et un siège (32) de sortie relié à un puits (40) de pression, soupape (34) à double siège, qui relie, en fonction de la commande, le au moins un raccord (42) pour le circuit pneumatique de frein, soit au raccord (58) pour le réservoir d'air comprimé, soit au puits (40) de pression, **caractérisé en ce que**
d) il est prévu des moyens (ECU, 52, 68; 76, 78, 102) de production d'une deuxième force d'actionnement, indépendamment d'une demande de frein par le conducteur, de manière à ce que la deuxième force d'actionnement agisse sur le au moins un piston de commande, parallèlement par rapport à la première force d'actionnement et dans le même sens ou dans le sens contraire, et **en ce que**, sur le au moins un piston de commande, agissent en parallèle la première force d'actionnement en fonction de la demande de frein du conducteur et la deuxième force d'actionnement, produite automatiquement et sans intervention du conducteur sur le piston de commande, et dans lequel le première force d'actionnement et la deuxième force d'actionnement actionnent ensemble le au moins un piston de commande et la soupape à double siège et, **en ce qu'**
e) il est prévu une interface (13) par laquelle des signaux formés en fonction de conditions de fonctionnement de marche sont entrés dans les moyens (ECU, 52, 68; 76, 78, 102) pour la production de la deuxième force d'actionnement.

12. Dispositif à soupape de frein de service suivant la revendication 11, **caractérisé en ce que** l'interface (13) est une interface de réception de signaux électriques, pneumatiques, hydrauliques ou mécaniques.

13. Dispositif à soupape de frein de service suivant la revendication 11 ou 12, **caractérisé en ce que** les moyens (ECU, 52, 68; 76, 78, 102) de production de la deuxième force d'actionnement comprennent un dispositif (ECU) électronique de commande et l'interface (13) est une interface électrique, le dispositif (ECU) électronique de commande étant constitué pour produire des signaux pour la formation de la deuxième force d'actionnement en fonction de signaux électriques, qui sont reçus par l'interface (13) électrique et qui sont formés en fonction de conditions de fonctionnement en marche.

14. Dispositif à soupape de frein de service suivant la revendication 13, **caractérisé en ce que** les moyens (ECU, 52, 68; 76, 78, 102) de production de la deuxième force d'actionnement comportent au moins un dispositif (52, 68; 76, 78) électropneumatique à électrovanne, qui commande, en fonction des signaux pour la formation de la deuxième force d'actionnement, au moins une pression pneumatique de commande, dont la deuxième force d'actionnement dépend.

15. Dispositif à soupape de frein de service suivant la revendication 14, **caractérisé en ce que** la pression de commande, commandée par le au moins un dispositif (52, 68; 76, 78) à électrovanne, est mesurée au moyen d'un système (102) de capteurs et est régulée par égalisation à une valeur de consigne dans le dispositif (ECU) électronique de commande, le système (102) de capteurs, le dispositif (52, 68; 76, 78) à électrovanne, ensemble avec le dispositif (ECU) électronique de commande, formant un régleur de la pression de commande pour réguler la pression pneumatique de commande.

16. Dispositif à soupape de frein de service suivant la revendication 14 ou 15, **caractérisé en ce que** la pression pneumatique de commande peut être appliquée dans au moins une chambre (22, 24) de commande, qui est délimitée par le au moins un piston (4; 12) de commande et par au moins une paroi (26; 98) du dispositif (1) à soupape de frein de service, la chambre (22, 24) de commande étant disposée de manière à provoquer, sur le au moins un piston (4; 12) de commande, lors d'une alimentation en air, une deuxième force d'actionnement de même sens que la première force d'actionnement ou de sens contraire à celle-ci.

17. Dispositif à soupape de frein de service suivant la revendication 16, **caractérisé en ce qu'**une première chambre (22) de commande est disposée, par rapport au au moins un piston (4; 12) de commande, de manière à produire, sur le au moins un piston (4; 12) de commande, par alimentation en air de la première chambre (22) de commande, une deuxième force d'actionnement de même sens que la première force d'actionnement et **en ce qu'**une deuxième chambre (24) de commande est disposée, par rapport au au moins un piston (4; 12) de commande, de manière à produire, sur le au moins un piston (4; 12) de commande, par alimentation en air de la deuxième chambre (24) de commande, une deuxième force d'actionnement de sens contraire à la première force d'actionnement.

18. Dispositif à soupape de frein de service suivant la revendication 17, **caractérisé en ce que** la première chambre (22) de commande peut, au moyen d'un premier dispositif (52) à électrovanne ou au moyen d'un premier régleur (ECU, 52, 102) de la pression de commande et la deuxième chambre (24) de commande peut, indépendamment de cela, au moyen d'un deuxième dispositif (68) à électrovanne ou au moyen d'un deuxième régleur (ECU, 68, 102) de la pression de commande, être alimentée en air ou être purgée.

19. Dispositif à soupape de frein de service suivant la revendication 17 ou 18, **caractérisé en ce que** le au moins un piston (4; 12) de commande est un piston double ayant deux pistons (18, 20; 92, 94) reliés par une tige (16; 96) de piston, dont un premier piston (18, 92) délimite la première chambre (22) de commande et dont un deuxième piston (20; 94) délimite la deuxième chambre (24) de commande, la première chambre (22) de commande et la deuxième chambre (24) de commande étant voisines de surfaces non tournées l'une vers l'autre d'une paroi (26; 98) intérieure du dispositif (1) à soupape de frein de service, lequel est traversé de manière étanche par la tige (16; 96) de piston.

20. Dispositif à soupape de frein de service suivant l'une des revendications 11 à 19, **caractérisé en ce qu'**il est prévu des moyens (67, 102) de capteur par lesquels la deuxième force d'actionnement, agissant sur le au moins un piston (4; 12) de commande, un trajet d'actionnement, provenant de la deuxième force d'actionnement, du au moins un piston (4; 12) de commande et/ou une grandeur produisant la deuxième force d'actionnement, est mesuré comme grandeur réelle, ainsi que des moyens (ECU, 52, 68 ; 76, 78) de régulation et de réglage, par lesquels la grandeur réelle est égalisée à une grandeur de consigne au sens d'une régulation.

21. Dispositif à soupape de frein de service suivant l'une des revendications 11 à 20, **caractérisé en ce que** les moyens (ECU, 52, 68; 76, 78, 102) de production de la deuxième force d'actionnement sont constitués pour produire une deuxième force d'actionnement de sens contraire à la première force d'actionnement en fonction de signaux entrés par l'interface (103) et représentant un degré d'actionnement et/ou un effet de freinage d'un frein à service continu ou d'un frein générique du véhicule.

22. Véhicule ayant un dispositif pneumatique ou électropneumatique de frein de service, comportant au moins un circuit pneumatique de frein de service ainsi qu'un dispositif (1) à soupape de frein de service suivant l'une des revendications 11 à 21.

23. Véhicule suivant la revendication 22, **caractérisé en ce qu'**il a au moins un système d'assistance à la conduite, qui entre, par l'interface, dans le dispositif (ECU) électronique de commande des signaux de commande, qui dépendent de conditions de fonctionnement en marche.

24. Véhicule suivant la revendication 23, **caractérisé en ce que** le au moins un système d'assistance à la conduite est l'un des systèmes d'assistance à la conduite suivant : une régulation du glissement d'entraînement (ASR), une régulation de suivi de distance (ACC), une assistance de frein d'urgence (AEBS), une régulation de dynamique de marche (ESP).
